# EUROPÄISCHE PATENTANMELDUNG

(11) **EP 4 279 799 A1**
(43) Veröffentlichungstag der Anmeldung: **22.11.2023**
(21) Anmeldenummer: 23172201.8
(22) Anmeldetag: 09.05.2023
(51) Int. Cl.: F21S 6/00, F21S 10/02, F21V 3/04, F21V 5/00, F21V 7/00, F21V 21/30, F21V 23/04, F21Y 103/10, F21Y 107/90, F21Y 113/10, F21Y 115/10

(54) **TISCH- ODER STEHLEUCHTE FÜR ARBEITSPLÄTZE**

(30) Priorität: 19.05.2022 DE 102022112563
(71) Anmelder: Zumtobel Lighting GmbH, 6850 Dornbirn (AT)
(72) Erfinder: MARTIN, Kenneth, 6850 Dornbirn (AT); MACHATE, Andreas, 6850 Dornbirn (AT); LUDWICZAK-OSTERLOHER, Bogna, 6850 Dornbirn (AT); PENZ, Johanna, 6850 Dornbirn (AT)
(74) Vertreter: Kiwit, Benedikt

(57) **Zusammenfassung**

Die Erfindung betrifft eine Tisch- oder Stehleuchte (1) für Arbeitsplätze (A), aufweisend einen Leuchtenkörper (2), welcher sich in einer Horizontalebene (H) entlang wenigstens einer Erstreckungsachse (X) erstreckt, ein erstes Leuchtmittel (4) zur Abgabe eines ersten Lichts als Primärbeleuchtung, ein zweites Leuchtmittel (5) zur Abgabe eines zweiten Lichts als Sekundärbeleuchtung, eine erste Lichtaustrittsfläche (6) zum Austritt des ersten Lichts bezüglich der Horizontalebene (H) im Wesentlichen nach unten, und eine zweite Lichtaustrittsfläche (7) zum Austritt des zweiten Lichts vollständig nach oberhalb der Horizontalebene (H) und wenigstens zu einer oder beiden Seiten einer die Erstreckungsachse (X) aufweisenden Vertikalebene (V) derart, dass die Lichtverteilung des zweiten Lichts auf der wenigstens einen Seite in der Ci8o Ebene oder in der Co oder auf beiden Seiten in der Co-Ci8o Ebene breiter von der Vertikalebene (V) weg streut als die Lichtverteilung des ersten Lichts, wobei das zweite Licht eine höhere Farbtemperatur aufweist als das erste Licht.

## Beschreibung

Die vorliegende Erfindung betrifft eine Tisch- oder Stehleuchte für Arbeitsplätze.

Aus dem Stand der Technik sind Tischleuchten bekannt. Diese leuchten in der Regel einzig mit einer direkten Beleuchtung einen darunterliegenden Arbeitsplatz aus. Auch sind Stehleuchten bekannt, welche eine (meist nach unten gerichtete) direkte Lichtabgabe als Primärbeleuchtung und/oder eine (meist nach oben gerichtete) indirekte Lichtabgabe als Sekundärbeleuchtung bereitstellen. Das direkte Licht erreicht dabei die Nutzflächen (wie bspw. einen Arbeitsplatz) direkt und in der Regel ohne weitere Reflexion nach dem Austritt aus der Leuchte. Das indirekte Licht erreicht dabei die Nutzflächen (wie bspw. den Arbeitsplatz) in der Regel über eine Reflexion an der Decke oder anderen Objekten, die sich oberhalb der Leuchte befinden, wie bspw. Akustik-Deckensegel. Derartige Leuchten weisen oft einen An-/Aus-Knopf zum Anschalten und Ausschalten der Leuchte auf. Auch können derartige Leuchten mit einer Steuervorrichtung verbunden sein, welche auf Basis von Sensordaten - bspw. von Sensoren in der Umgebung oder an bzw. in der Leuchte - eine Steuerung der Lichtabgabe bewirken.

Neben Tisch- oder Stehleuchten für Arbeitsplätze sind auch Arbeitsplatzleuchten bekannt, welche als Pendelleuchten über dem Arbeitsplatz von der Decke herunterhängend vorgesehen sind. Um derartige Leuchten optimal zu platzieren, bedarf es einer vorhergehenden Büroplanung und anschließend korrekten Positionierung und Ausrichtung von Arbeitsplatz und Leuchte zueinander. Da die Leuchten fest an der Decke montiert sind, hat ein einfaches Verstellen der Arbeitsplätze oft zur Folge, dass die Arbeitsplätze dann nicht mehr effektiv ausgeleuchtet sind, was wiederum die Arbeitsleistung eines Nutzers beeinträchtigen kann. So kann es erforderlich werden, die entsprechenden Pendelleuchten neu zu montieren und ggf. entsprechende Verkabelung neu zu verlegen.

Derzeit bekannte Arbeitsplatzleuchten mit direkter und indirekter Beleuchtung weisen in der Regel Licht derselben Farbtemperatur für den direkten und den indirekten Lichtanteil auf. Bei Verwendung von Tunable White LEDs kann die gegebene Farbtemperatur mitunter eingestellt werden; meist in einem Abstimmbereich von 2700 K bis 6500 K.

Sind die Arbeitsplatzleuchten mit zusätzlich indirekter Lichtverteilung als Pendelleuchten bereitgestellt, werden diese in der Regel relativ hoch aufgehängt, um eine Kollision mit großen Personen zu vermeiden. Liegt eine relativ niedrige Deckenhöhe vor, wird so die indirekte Lichtabgabe, also die Sekundärbeleuchtung, aufgrund ihrer geringen Distanz zur Decke stark beschränkt.

Arbeitsplatzstehleuchten - insbesondere auch solche mit indirekter Lichtverteilung - werden in der Regel an einer der langen Tischseiten eines Tisches platziert. Dies ist meist die dem Arbeitsplatz gegenüberliegende Tischseite. Um nun den Arbeitsplatz ausreichend und gleichmäßig auszuleuchten, wird der Leuchtenkopf solcher Stehleuchten in der Regel relativ hoch positioniert, was wiederum die Sekundärbeleuchtung beschränkt.

Es ist somit eine Aufgabe der vorliegenden Erfindung, eine Tisch- oder Stehleuchte für Arbeitsplätze der eingangs genannten Art bereitzustellen, deren Primärbeleuchtung und Sekundärbeleuchtung optimal an die Arbeitsplatzsituation angepasst ist; dies bevorzugt bei insgesamt guter Entblendung sowie gleichzeitig positiver melanopischer Wirkung sowie vorzugsweise in Abhängigkeit des zirkadianen Rhythmus.

Diese Aufgabe wird durch den Gegenstand des unabhängigen Anspruchs gelöst. Die abhängigen Ansprüche bilden den zentralen Gedanken der vorliegenden Erfindung in besonders vorteilhafter Weise weiter.

Gemäß einem ersten Aspekt betrifft die Erfindung eine Tisch- oder Stehleuchte für Arbeitsplätze (im Folgenden auch einfach als "Leuchte" bezeichnet). Die Leuchte weist einen Leuchtenkörper auf, welcher sich in einer Horizontalebene entlang wenigstens einer Erstreckungsachse erstreckt. Mithin kann es sich bei der Leuchte um eine längliche Leuchte, eine Linearleuchte, eine flächige Leuchte und dergleichen handeln. Die Leuchte weist des Weiteren ein erstes Leuchtmittel zur Abgabe eines ersten Lichts als Primärbeleuchtung auf. Die Leuchte weist des Weiteren ein zweites Leuchtmittel zur Abgabe eines zweiten Lichts als Sekundärbeleuchtung auf. Ferner weist die Leuchte eine erste Lichtaustrittsfläche zum Austritt des ersten Lichts bezüglich der Horizontalebene im Wesentlichen nach unten (beispielsweise im Wesentlichen senkrecht nach unten) auf. Darüber hinaus weist die Leuchte ferner eine zweite Lichtaustrittsfläche zum Austritt des zweiten Lichts vollständig nach oberhalb der Horizontalebene und wenigstens zu einer oder beiden Seiten einer die Erstreckungsachse aufweisenden Vertikalebene derart auf, dass die Lichtverteilung des zweiten Lichts auf der wenigstens einen Seite in der C180 oder in der C0 Ebene oder auf beiden Seiten in der C0-C180 Ebene breiter von der Vertikalebene weg streut als die Lichtverteilung des ersten Lichts. Das zweite Licht hat dabei eine höhere Farbtemperatur als das erste Licht. Die Vertikalebene trennt folglich die C0 Ebene (bevorzugt die von dem Leuchtenkörper zu einem Nutzer am Arbeitsplatz hin gerichtete Ebene) von der C180 Ebene (bevorzugt die von dem Leuchtenkörper von einem Nutzer am Arbeitsplatz weg gerichtete Ebene).

Die vorbeschriebene Leuchte ist zum einen als Tisch- oder Stehleuchte für Arbeitsplätze ausgebildet und kann somit in einfacher Weise dem Arbeitsplatz selbst zugeordnet werden. Somit wandert die Leuchte bestenfalls mit dem Arbeitsplatz einfach mit, sollte dieser bewegt werden; beispielsweise im Zuge einer Neuanordnung der Arbeitsplätze in einem Großraumbüro oder auch durch Umstellen eines Arbeitsplatzes an jeglicher anderer Stelle. Da die Arbeitsplatzleuchte folglich dem Arbeitsplatz einfach zuordenbar ist, kann eine effektive Primärbeleuchtung aufgrund der Nähe der Leuchte zu dem Arbeitsplatz einfach ermöglicht werden. Darüber hinaus kann aufgrund der breit streuenden Sekundärbeleuchtung eine gleichmäßige Beleuchtung auf einer großen Fläche (beispielsweise einer Zimmerdecke) erzielt werden; dies umso mehr im Vergleich zu Arbeitsplatz-Pendelleuchten, welche in der Regel vergleichsweise höher positioniert sind. Durch die unterschiedliche Farbtemperatur (Correlated Colour Temperature; CCT) des ersten und zweiten Lichts wird darüber hinaus erreicht, dass die so bereitgestellte Leuchte einerseits zum Arbeitsplatz hin ein entsprechend angenehmes Licht abgibt, während die Sekundärbeleuchtung mit höherer Farbtemperatur des zweiten Lichts für eine insgesamt abgestimmte Raumbeleuchtungssituation sorgt; dies bevorzugt beispielsweise nach dem Human Centric Lighting (HCL) bzw. Integrative Lighting Beleuchtungskonzept. So kann bevorzugt für den Nutzer am Arbeitsplatz eine insgesamt wohltuende Beleuchtungssituation geschaffen werden, welche der gegebenen Lebens- oder Arbeitssituation angepasst sich auch positiv auf Gesundheit, Wohlbefinden und Leistungsfähigkeit des Menschen auswirken kann. Bevorzugt kann so die Leuchte als Stand-Alone Lösung für ein Raumbeleuchtungskonzept und bevorzugt insbesondere zur Erfüllung gegebener Standards und Regularien, wie beispielsweise der Norm EN 12464-1:2021-08 und der deutschen technischen Regel für Arbeitsstätten (Arbeitsstättenregel, ASR) A3.4 vom Ausschuss für Arbeitsstätten, dienen.

Die vorbeschriebene Leuchte kann somit bevorzugt eine Beleuchtung eines Arbeitsplatzes mit den Beleuchtungsnormen entsprechenden Reflexionsgraden eines Arbeitsplatztisches (50%) und der Decke (70%) in einem Referenzraum mit 2,8 m Deckenhöhe mittlere melanopische Leuchtdichten im gesamten Gesichtsfeld des Nutzers bewirken. Die melanopischen Leuchtdichten von Arbeitsplatz(tisch) und, wenn vorhanden, Arbeitsplatz-Trennflächen im Vergleich zur Decke weichen dabei nicht, wie sonst üblich, stark (d.h. um Dekaden) voneinander ab. Durch die Sekundärbeleuchtung mit ihrer höherer Farbtemperatur und ihrer großflächigen Beleuchtung mit bevorzugt mittleren Leuchtdichten der Decke bzw. der Deckenelemente zusammen mit den ebenfalls relativ hohen melanopischen Leuchtdichten bei jedoch geringerer relativer melanopischer Wirksamkeit auf dem Arbeitsplatz gelingt es mit der vorbeschriebenen Leuchte, eine für das menschliche Auge überraschend angenehme Farbsituation mit insgesamt hoher melanopischer Wirksamkeit bereitzustellen.

Die erste Lichtaustrittsfläche kann sich bevorzugt im Wesentlichen in einer Erstreckungsebene parallel zur Horizontalebene erstrecken. Die zweite Lichtaustrittsfläche kann sich ebenso im Wesentlichen in einer Erstreckungsebene parallel zur Horizontalebene erstrecken. Somit können ein einfacher Leuchtenaufbau und somit insgesamt einfach ausgebildete Bauteile für eine kostengünstige und ästhetisch ansprechende Leuchte bereitgestellt werden.

Das erste Leuchtmittel kann bevorzugt in dem Leuchtenkörper angeordnet sein. Die erste Lichtaustrittsfläche kann dann durch eine erste Durchtrittsöffnung in dem Leuchtenkörper begrenzt sein. In vergleichbarer Weise kann auch das zweite Leuchtmittel in dem Leuchtenkörper angeordnet sein, wobei dann die zweite Lichtaustrittsfläche durch eine zweite Durchtrittsöffnung in dem Leuchtenkörper begrenzt sein kann. Durch diese Ausgestaltung können einerseits die Leuchtmittel sicher und geschützt in dem Leuchtenkörper angeordnet werden. Zum anderen kann so die Leuchte insgesamt ästhetisch ansprechend bereitgestellt werden. Auch können so etwaige, der Lichtlenkung dienenden Elemente in dem Leuchtenkörper sicher aufgenommen und verborgen vorgesehen werden. Zudem kann durch die begrenzten Durchtrittsöffnungen einfache aber effektive Entblendungsmittel bereitgestellt werden.

Die erste Lichtaustrittsfläche kann sich in Richtung der Erstreckungsachse gesehen im Wesentlichen entlang des gesamten Leuchtenkörpers erstrecken. Ebenso kann sich auch die zweite Lichtaustrittsfläche in Richtung der Erstreckungsachse gesehen im Wesentlichen entlang des gesamten Leuchtenkörpers erstrecken. Auf diese Weise kann für die Primärbeleuchtung beziehungsweise die Sekundärbeleuchtung ein möglichst großer Lichtabgabebereich bereitgestellt werden. Somit kann eine Licht-technisch effektive Leuchte bereitgestellt werden. Zudem sorgt eine entsprechend ausgebildete Lichtaustrittsfläche für ein ästhetisch ansprechendes Erscheinungsbild der Leuchte insgesamt.

Die erste Lichtaustrittsfläche kann eine Primäroptik zur Beeinflussung des ersten Lichts oder eine erste lichtdurchlässige Abdeckung aufweisen. Somit kann eine zum Arbeitsplatz gerichtete Primärbeleuchtung in beliebiger Weise für eine definierte Lichtabgabe optimiert werden.

Bei der Primäroptik kann es sich bevorzugt um eine oder mehrere Platten und/oder Folien und/oder einen Diffusor handeln. Auf diese Weise kann eine besonders homogene Lichtabgabe zum Arbeitsplatz hin als Primärbeleuchtung bereitgestellt werden, welche folglich eine homogene Ausleuchtung des Arbeitsplatzes und somit ein hohes Wohlbefinden des Nutzers ermöglicht. In einer besonders bevorzugten Ausgestaltungsform kann hierzu wenigstens eine (oder mehrere) der Platten bzw. Folien konkave bzw. konische und/oder geradlinige und/oder konvexe pyramiden- und/oder kegelförmige Mikrostrukturen aufweisen. Bevorzugt bewirken diese Mikrostrukturen als Entblendungs-Mikrostrukturen eine besonders effektive Entblendung der Leuchte.

Die Primäroptik kann in der ersten Durchtrittsöffnung angeordnet sein und diese bevorzugt vollständig abdecken. Auf diese Weise kann zum einen die Leuchte insgesamt ästhetisch ansprechend gestaltet werden. Zum anderen kann die Optik so an einem zur Beleuchtung optimalen Bereich vorgesehen werden, da so das von den ersten Leuchtmitteln abgegebene Licht im Bereich des Lichtaustritts beispielsweise vollständig durchmischt ist und sodann eine insgesamt homogene oder gezielt gerichtete Lichtabgabe entsprechend optimiert abgegeben werden kann. Auch können so die in dem Leuchtenkörper liegenden Bauteile (bspw. die ersten Leuchtmittel) wirkungsvoll geschützt werden.

Die zweite Lichtaustrittsfläche kann bevorzugt eine Sekundäroptik zur Beeinflussung des zweiten Lichts oder eine zweite lichtdurchlässige Abdeckung aufweisen. Bei der Sekundäroptik kann es sich beispielsweise um eine Lichtleiterplatte handeln, welche sich bevorzugt über die zweite Durchtrittsöffnung spannt beziehungsweise diese vollständig abdeckt. Die Sekundäroptik oder die lichtdurchlässige Abdeckung sind bevorzugt in der zweiten Durchtrittsöffnung angeordnet oder decken diese vorzugsweise vollständig ab. So kann die Sekundäroptik bzw. lichtdurchlässige Abdeckung zum Schutz von in dem Leuchtenkörper liegenden Bauteilen, wie den zweiten Leuchtmitteln, dienen. Somit kann auch die zweite Lichtaustrittsfläche den Anforderungen entsprechend gezielt ausgebildet werden.

Das erste Leuchtmittel kann bevorzugt eine bezüglich der Horizontalebene im Wesentlichen (vorzugsweise weitestgehend senkrecht) nach unten gerichtete erste Hauptlichtabgaberichtung des ersten Lichts aufweisen. Auf diese Weise kann eine gezielt zum Arbeitsplatz nach unten gerichtete Primärbeleuchtung bereitgestellt werden.

Die Leuchte kann dann ferner bevorzugt Lichtrichtabschnitte aufweisen, um das erste Licht entsprechend über die erste Lichtabgabefläche gerichtet abzugeben. Bei den Lichtrichtabschnitten kann es sich beispielsweise um entsprechende Reflektoren handeln, die das Licht gemäß der gewünschten Lichtabgaberichtung und Lichtabgabeverteilung lenken beziehungsweise bündeln. Somit kann eine insgesamt gezielte Lichtabgabe zur Primärbeleuchtung bereitgestellt werden.

Das zweite Leuchtmittel kann bevorzugt eine bezüglich der Horizontalebene im Wesentlichen parallel gerichtete erste Hauptlichtabgaberichtung des zweiten Lichts aufweisen. Die zweiten Leuchtmittel können in diesem Fall bevorzugt von der Vertikalebene weg oder auf diese zu gerichtet sein. Die Leuchte weist dann ferner Lichtumlenkabschnitte auf, um das zweite Licht entsprechend über die zweite Lichtabgabefläche gerichtet abzugeben. Bei den Lichtumlenkabschnitten kann es sich - beispielsweise bei den von der Vertikalebene weg gerichteten zweiten Leuchtmitteln - um Reflektoren zur Umlenkung des Lichts zur Lichtabgabe über die zweite Lichtabgabefläche handeln. Auch ist es denkbar, dass es sich bei den Lichtumlenkabschnitten - insbesondere bei zu der Vertikalebene hin gerichteten zweiten Leuchtmitteln - um einen Lichtleiter beziehungsweise eine Lichtleiterplatte (beispielsweise die vorbeschriebene Lichtleiterplatte) handelt, in den/die das zweite Licht eingekoppelt wird, darin in der Regel mittels Totalreflexion fortpflanzt und dann über definierte Lichtabgabebereiche der Lichtleiterplatte (welche beispielsweise die zweite Lichtabgabefläche bildet) entsprechend zur Sekundärlichtabgabe abgibt. Somit kann eine den Anforderungen entsprechend optimierte Sekundärbeleuchtung erzielt werden. Dies bevorzugt mit vergleichsweise einfachen Mitteln, beispielsweise über gedruckte oder per Laser oder mechanisch eingravierte Licht-Auskoppelstrukturen als definierte Lichtabgabebereiche.

Die Leuchte kann bevorzugt ferner ein Standelement mit einem Ständerarm, welches den Leuchtenkörper trägt und sich von diesem weg erstreckt, sowie einem Tragelement, welches an einem dem Leuchtenkörper abgewandten Ende des Ständerarms zum Tragen der Leuchte vorgesehen ist, aufweisen. Auf diese Weise kann der Leuchtenkörper entsprechend einfach positioniert und gegebenenfalls montiert werden.

Das Tragelement kann bevorzugt ein Ständerfuß sein, sodass die Leuchte in einfacher Weise durch Aufstellen auf den Ständerfuß platziert werden kann und somit bei Bedarf auch einfach umplatziert werden kann. Das Tragelement kann auch ein Montageelement, wie ein Tisch- oder Wandmontageelement, sein. Somit kann die Leuchte bei Bedarf einfach an einem Tisch oder an einer Wand und dergleichen montiert werden.

Die C0 Ebene ist bevorzugt von dem Standelement oder dem Tragelement, wenn vorhanden, weg gerichtet. Bei einseitiger Lichtabgabe in der C0 Ebene kann so die Lichtabgabe in einfacher Weise ungehindert nah zu einem Nutzer am Arbeitsplatz hin gerichtet werden. Die C180 Ebene ist bevorzugt zu dem Standelement oder dem Tragelement, wenn vorhanden, hin gerichtet. Bei einseitiger oder einseitig regulierbarer Lichtabgabe in der C180 Ebene kann so bei Bedarf die Lichtabgabe gezielt von einem Nutzer weg auf den Arbeitsplatz gerichtet werden. Mithin kann so beispielsweise die Lichtabgabe in einfacher Weise ungehindert auf einen Hintergrundbereich (z.B. eine Wand oder ein vertikales Trennpanel zwischen Arbeitsplätzen) beispielsweise eines oder mehrerer Bildschirme im Gesichtsfeld des Nutzers am Arbeitsplatz gerichtet werden, ohne dass die Bildschirm-Anzeigefläche stark beleuchtet wird; dies zudem ohne, dass die Lichtaustrittsfläche im Gesichtsfeld des Nutzers liegt. Dies ist zur Verhinderung von Blendeffekten vorteilhaft. Außerdem ist dies für die gezielte nichtvisuelle (melanopische) Wirkung, welche aus der melanopischen Leuchtdichte-Verteilung im Gesichtsfeld des Nutzers resultiert, vorteilhaft, welche entsprechend der Tageszeit damit passend eingestellt werden kann, wie sie beispielsweise am Abend oder in der Nacht gewünscht ist. Bei beidseitiger Lichtabgabe in der C0-C180 Ebene können die vorgenannten Vorteile bei Bedarf kombiniert werden.

Der Ständerarm kann bevorzugt gelenkig ausgebildet sein, um die Position des Leuchtenkörpers relativ zum Tragelement veränderbar einzustellen und somit den Leuchtenkörper am Arbeitsplatz bei Bedarf beliebig zu positionieren. Hierzu kann der Ständerarm beispielsweise Gelenkelemente zur Veränderung der relativen Position des Leuchtenkörpers zu dem Tragelement aufweisen.

Der Leuchtenkörper kann bevorzugt in Draufsicht auf die Horizontalebene bezüglich des Tragelements versetzt oder versetzbar angeordnet sein. Somit kann beispielsweise bei Tischrand-seitiger Montage oder Aufstellen des Tragelements der Leuchtenkörper zum Arbeitsplatz hin versetzt positioniert sein, um somit eine zum Arbeitsplatz optimierte Lichtabgabe insbesondere für das Primärlicht bereitstellen zu können. Der Versatz beziehungsweise die Versetzbarkeit liegt dabei bevorzugt parallel zur Erstreckungsachse vor, um somit nach Belieben die Lichtcharakteristik der Leuchte bei unveränderter Orientierung wahlweise auf den Arbeitsplatz zu oder von diesem weg zu bewegen beziehungsweise relativ zu diesem zu versetzen.

Der Versatz kann bevorzugt wenigstens 25 cm und besonders bevorzugt (wenigstens oder genau) 40 cm betragen, um somit einerseits eine optimale Positionierung des Leuchtenkörpers zur Abgabe der Primär- und Sekundärbeleuchtung bereitzustellen, und andererseits weiterhin ausreichend Platz für einen Nutzer sowie andere Gegenstände (wie Arbeitsutensilien) am Arbeitsplatz zu lassen. Die Leuchte kann so bevorzugt möglichst mittig über einem Arbeitsplatztisch platzierbar sein (bspw. bei einer Tiefe eines Arbeitsplatztisches von in der Regel 60 cm und mehr), um so bestenfalls effektiv eine Reflexblendung - bspw. beim Betrachten von Tablets und Hochglanzbroschüren etc. - zu verhindern.

Die Leuchte und vorzugsweise deren Standelement (wenn vorhanden) kann/können derart ausgebildet sein, dass die zweite Lichtaustrittsfläche in der Betriebsposition der Leuchte oberhalb einer Höhe von 170 cm beziehungsweise 175 cm beziehungsweise 177 cm beziehungsweise 180 cm gegenüber der Fußbodenebene (also über dem Fußboden) angeordnet bzw. anordenbar ist. Somit kann erreicht werden, dass ein hohes Perzentil bezüglich der Größe der Menschen und Höhe von deren Augen insbesondere die zweite Lichtaustrittsfläche beziehungsweise den Lichtaustritt des zweiten Lichts nicht direkt sieht, wodurch für ein entsprechend hohes Perzentil eine insgesamt gute Entblendung bei gleichzeitig guter Positionierung der Leuchte bezüglich des Arbeitsplatzes und dem Abstand zur Decke oder Objekten oberhalb der Leuchte zur Erzielung einer insgesamt vorteilhaften Beleuchtungscharakteristik erzielt werden kann. Bevorzugt ist dabei die Leuchte und vorzugsweise deren Standelement (wenn vorhanden) derart ausgebildet, dass die zweite Lichtaustrittsfläche in der Betriebsposition der Leuchte ferner unterhalb einer Höhe von 200 cm gegenüber der Fußbodenebene angeordnet ist, um so sowohl eine effektive Primärbeleuchtung als auch eine effektive Sekundärbeleuchtung bei gleichzeitig effektiver Entblendung zu ermöglichen.

Der Leuchtenkörper kann sich entlang der Erstreckungsachse längs erstrecken. Mithin kann der Leuchtenkörper also als längliche Leuchte oder Linearleuchte ausgebildet sein. Somit kann bei geringer Baugröße bzw. Tiefe der Leuchte eine insgesamt breite Lichtabgabefläche vor dem Arbeitsplatz bereitgestellt werden. Vorzugsweise kann der Leuchtenkörper dann eine Längserstreckung von wenigstens 1150 mm oder 1200 mm oder 1450 mm oder 1500 mm aufweisen, um so entsprechend für kleinere oder auch größere Tische mit optimaler Ausleuchtung entsprechend bereitgestellt zu sein.

Alternativ oder ergänzend kann die erste Lichtaustrittsfläche sich ebenso entlang der Erstreckungsachse längs erstrecken. Ebenso kann sich die zweite Lichtaustrittsfläche entlang der Erstreckungsachse längs erstrecken. Somit kann in Abhängigkeit oder unabhängig von der Form beziehungsweise Längserstreckung des Leuchtenkörpers die entsprechende erste beziehungsweise zweite Lichtaustrittsfläche breit ausgebildet sein, um somit eine insgesamt breite Lichtabgabe zur Primärbeleuchtung beziehungsweise Sekundärbeleuchtung bereitzustellen.

Das zweite Licht kann bevorzugt eine um wenigstens 500 K oder wenigstens 800 K oder wenigstens 1000 K oder wenigstens 3000 K oder wenigstens 4500 K oder wenigstens 6000 K höhere Farbtemperatur aufweisen als das erste Licht. Auf diese Weise ist es möglich, eine Gesamtbeleuchtungssituation bereitzustellen, bei der der Arbeitsplatz gezielt mit einer zum Arbeiten - auf oder mit kaum blau absorbierenden oder eher neutral (weißen, grauen oder pastellfarbenen) oder gar glänzend reflektierenden Oberflächen - angenehmen niedrigen Farbtemperatur bereitgestellt wird, während die Sekundärbeleuchtung vergleichsweise deutlich bis sehr stark höherer Farbtemperatur bereitgestellt wird, um so bevorzugt eine beispielsweise dem Tageslicht oder dem zirkadianen Rhythmus entsprechende Lichtsituation bereitstellen zu können, welche sich insgesamt wiederum positiv auf die melanopische Wirksamkeit auswirken kann.

Das erste Leuchtmittel ist bevorzugt derart ausgebildet, dass es warmweißes und/oder neutralweißes Licht als erstes Licht abgeben kann. Ein derartiges Licht zur Primärbeleuchtung sorgt bevorzugt für eine angenehme Arbeitsatmosphäre auf und an dem Arbeitsplatz. Unter "angenehm" wird in diesem Zusammenhang sowie im Rahmen der Erfindung allgemein bevorzugt verstanden, dass der reflektierte Blauanteil gegenüber den anderen spektralen Anteilen (grün, gelb, rot) aus dem unteren Sichtfeld des Nutzers wie in der Natur entsprechend relativ klein ist. Dadurch wird das Auge weniger angestrengt.

Die Farbtemperatur des ersten Lichts liegt bevorzugt im Bereich von 2500 K bis 4700 K oder im Bereich von 2600 K bis 3600 K. Die Primärbeleuchtung wird somit mit einer Farbtemperatur bereitgestellt, welche für einen Arbeitsplatz eine angenehme und gute Arbeitsatmosphäre ermöglicht.

Die Farbtemperatur des ersten Lichts kann bevorzugt innerhalb eines der vorbeschriebenen Bereiche oder innerhalb eines in einem dieser Bereiche liegenden Abstimmbereichs einstellbar sein. Diese Tunable White Funktion soll es ermöglichen, die Farbtemperatur des Arbeitsplatzes nach Bedarf anzupassen und so eine optimale Arbeitsbeleuchtungsbedingung zu schaffen. Indem die Farbtemperatur einstellbar ist, kann der melanopische Kontrast zwischen einer hohen Leuchtdichte auf dem Arbeitsplatz und einer niedrigeren Leuchtdichte aber dafür nicht signifikant schwächerer melanopischer Wirksamkeit der Sekundärbeleuchtung nach Bedarf angepasst beziehungsweise reduziert werden.

Das zweite Leuchtmittel kann bevorzugt neutralweißes und/oder kaltweißes Licht als zweites Licht abgeben. Somit ist es möglich, eine gewünschte Sekundärbeleuchtungssituation beispielsweise in Anlehnung an eine Himmelssituation (z.B. "blue sky" Effekt) anzupassen.

Das zweite Leuchtmittel ist dazu geeignet, das zweite Licht mit einer Farbtemperatur von > 9000K oder > 9900K abzugeben. Das zweite Leuchtmittel ist demnach dazu eingerichtet, das zweite Licht mit einer besonders hohen Farbtemperatur abzugeben, auch wenn es bspw. aufgrund einer Tunable White Anwendung temporär mit einer niedrigeren Farbtemperatur betrieben wird. Die Farbtemperatur (CCT) des zweiten Lichts kann bevorzugt im Bereich von 4500 K bis 15000 K oder von 5500 K bis 15000 K oder von 5500 K bis 9900 K liegen; besonders bevorzugt > 9900 K. Die Sekundärbeleuchtung kann somit zur Erzielung einer insgesamt angenehmen Beleuchtungssituation mit bevorzugt hoher melanopischer Wirksamkeit bereitgestellt werden. So ist es beispielsweise denkbar, mit einer besonders hohen Farbtemperatur des zweiten Lichts an einer Raumdecke einen blauen Himmel ("blue sky" Effekt) zu imitieren, bevorzugt mit einem nahezu natürlichen Farbspektrum, um somit eine besonders hohe melanopische Wirksamkeit des Lichtes der Leuchte insgesamt zu erzielen; dies bevorzugt im Zusammenspiel mit der Primärbeleuchtung.

Die Farbtemperatur des zweiten Lichts ist bevorzugt innerhalb eines der vorbeschriebenen Bereiche oder innerhalb eines in einem dieser Bereiche liegenden Abstimmbereichs einstellbar. Mit dieser Tunable White Funktion kann somit die Farbtemperatur je nach gewünschter Lichtsituation eingestellt werden. Beispielsweise kann so eine Lichtsituation entsprechend dem zirkadianen Rhythmus eingestellt werden. Durch dynamisches Dimmen bspw. zwischen Blau und Weiß kann mittels der Tunable White Funktion beispielsweise eine Simulation ziehender Wolken erzeugt werden. Durch diese Dynamik können dann noch stärker Gewöhnungseffekte reduziert werden, wodurch die nichtvisuelle Effektivität der Leuchte verbessert werden kann. Zudem kann die Lichtwirkung dadurch natürlicher bzw. bionischer wirken.

Das zweite Licht des zweiten Leuchtmittels macht bevorzugt 75 % oder mehr der gesamten Lichtverteilung der Tisch- oder Stehleuchte aus. Somit wird ein ausgewogenes Verhältnis zwischen Primärbeleuchtung und Sekundärbeleuchtung geschaffen, welche eine angenehme Lichtsituation und bevorzugt eine hohe melanopische Wirksamkeit ermöglicht.

Das Verhältnis von dem ersten Licht zu dem zweiten Licht an der gesamten Lichtverteilung ist bevorzugt veränderbar, um so die Lichtsituation insgesamt nach Belieben einzustellen und beispielsweise einen melanopischen Kontrast entsprechend variabel einzustellen.

Das erste Licht kann bevorzugt (bspw. einzig) in der C0 Ebene oder in der C180 Ebene (insbesondere wenn nur zu einer Seite der Vertikalebene gerichtet) vorzugsweise auch in der C0-C180 Ebene (insbesondere wenn zu beiden Seiten der Vertikalebene gerichtet) je Ebene eine - bevorzugt wenigstens verstärkte - Lichtverteilung in einem Winkelbereich von <60° oder <45° oder <30° aufweisen; dies bevorzugt gegenüber der Vertikalebene bzw. ausgehend von der (vzw. senkrecht) nach unten gerichteten ersten Hauptlichtabgaberichtung des ersten Lichts bzw. des ersten Leuchtmittels. Somit kann die Primärbeleuchtung gezielt auf den Arbeitsplatz ausgerichtet werden und dort effektiv eine hochqualitative - also insbesondere eine in hohem Maße gleichmäßige - Lichtsituation schaffen.

Im Rahmen der vorliegenden Erfindung ist unter "wenigstens verstärkte Lichtverteilung" zu verstehen, dass in dem genannten Bereich die Lichtstärke (deutlich) höher als in den übrigen Bereichen derselben Ebene liegt oder überwiegend oder einzig in diesem Bereich der entsprechenden Ebene eine (nennenswerte) Lichtverteilung vorliegt, was mithin auch als gerichtete oder konzentrierte Lichtabgabe bzw. Lichtverteilung bezeichnet wird.

Das erste Licht kann überdies eine - bevorzugt wenigstens verstärkte -Lichtverteilung in der C90-C270 Ebene in einem Winkelbereich von <65° oder <50 ° oder <35°; dies bevorzugt gegenüber einer zur Vertikalebene orthogonal orientierten und die C90 Ebene von der C270 Ebene trennenden zweiten Vertikalebene bzw. ausgehend von der (vzw. senkrecht) nach unten gerichteten ersten Hauptlichtabgaberichtung des ersten Lichts bzw. des ersten Leuchtmittels aufweisen. Auf diese Weise kann das erste Licht auch quer zum Arbeitsplatz gesehen optimiert auf ebendiesen ausgerichtet werden, um somit eine hocheffektive Primärbeleuchtung zu erzeugen.

Wie sich aus dem zuvor Beschriebenen ergibt, kann die Lichtverteilung des ersten Lichts folglich symmetrisch oder asymmetrisch sein; dies je nach Belieben und den Gegebenheiten des Arbeitsplatzes oder der Arbeitsplätze entsprechend.

Das zweite Leuchtmittel kann bevorzugt (bspw. einzig) in der C0 Ebene oder in der C180 Ebene (insbesondere wenn nur zu einer Seite der Vertikalebene gerichtet oder wenn das zweite Leuchtmittel der Sekundärbeleuchtung auf einer Seite der Vertikalebene gedimmt wird) oder bevorzugt auch in der C0-C180 Ebene (insbesondere wenn zu beiden Seiten der Vertikalebene gerichtet) je Ebene eine Lichtverteilung des zweiten Lichts in einem Winkelbereich von >90° und <180°, vorzugsweise eine - bevorzugt wenigstens verstärkte - Lichtverteilung des zweiten Lichts in einem Winkelbereich zwischen 100° und 155° oder zwischen 110° und 145°, aufweisen. Auf diese Weise wird eine gerichtete und (wenigstens in der C0-C180 Ebene) besonders breite Lichtverteilung der Sekundärbeleuchtung erzielt, welche somit breit abstrahlt und daher eine großflächige Beleuchtung beispielsweise einer Decke selbst oder - bei geringer Deckenhöhe - der Decke sowie den daran angrenzenden oberen Teilen der Wände ermöglicht. Auf diese Weise kann vor allem im Sichtfeld des Nutzers eine großflächige und beispielsweise himmelsähnliche Deckenbeleuchtung mit der vorbeschriebenen Leuchte erzielt werden.

In einer bevorzugten Ausgestaltungsform kann das zweite Licht in der C0-C180 Ebene in einer Batwing- oder Batwing-artigen Lichtverteilungskurve abgegeben werden, welche bevorzugt im Bereich von 165° bis 180° der entsprechenden Ebene zugunsten kleinerer Winkel reduzierte oder im Wesentlichen keine Lichtanteile aufweist. Auf diese Weise kann eine besonders breite und sehr großflächige Beleuchtungssituation geschaffen werden, welche beispielsweise eine Himmelssituation mittels der Sekundärbeleuchtung nachbilden kann.

Das zweite Licht kann bevorzugt in der C90-C270 Ebene wenigstens in einer Lambertschen Abstrahlung oder auch mit einer Batwing oder Batwing-artigen Lichtverteilungskurve abgegeben werden. Auf diese Weise kann die breite Lichtverteilung gezielt auch quer zum Arbeitsplatz und somit beispielsweise seitlich eines Nutzers fortgesetzt werden, sodass die Lichtsituation insgesamt großflächig erzeugt werden kann.

Bevorzugt weist die Lichtstärkeverteilung des ersten Lichts (bspw. einzig) in der C0 Ebene oder in der C180 Ebene (insbesondere wenn nur zu einer Seite der Vertikalebene gerichtet) oder in der C0-C180 Ebene (insbesondere wenn zu beiden Seiten der Vertikalebene gerichtet) je Ebene oder insgesamt ein Maximum in einem Winkelbereich zwischen 0° und <15° (bei zwei Maxima in zwei Ebenen folglich je Ebene, und bei einem Maximum über beide Ebenen folglich in einer der beiden Ebenen), vorzugsweise bei 0°, auf. Somit kann eine effektive und gezielte Beleuchtung eines (vzw. senkrecht) unter der Leuchte befindlichen Arbeitsplatzes bei gleichzeitig guter Entblendung ermöglicht werden.

Die Lichtstärke des ersten Lichts beträgt relativ zum Gesamtlichtstrom der Leuchte in einem zusammenhängenden Winkelbereich von 40° in dem entsprechenden Maximum oder übergreifend in den entsprechenden Maxima (also bei Vorliegen mehrerer Maxima einem zusammenhängenden und die mehreren Maxima aufweisenden Winkelbereich) Iᵥ > 150 cd/klm. Auf diese Weise wird eine gerichtete und homogene Lichtstärkeverteilung auf den Arbeitsplatz ermöglicht; dies insbesondere bei einer für diese Tisch- oder Stehleuchten typischen Betriebshöhe des Leuchtenkörpers.

Bevorzugt weist die Lichtstärkeverteilung des zweiten Lichts (bspw. einzig) in der C0 Ebene oder in der C180 Ebene (insbesondere wenn nur zu einer Seite der Vertikalebene gerichtet oder wenn das zweite Leuchtmittel der Sekundärbeleuchtung auf einer Seite der Vertikalebene gedimmt wird) oder in der C0-C180 Ebene (insbesondere wenn zu beiden Seiten der Vertikalebene gerichtet oder entsprechend gesteuert/gedimmt wird) je Ebene ein Maximum in einem Winkelbereich zwischen >90° und <160°, vorzugsweise zwischen 115° und 140°, auf. Auf diese Weise kann eine breite und homogene Lichtstärkeverteilung beispielsweise an einer Raumdecke erzielt werden; dies insbesondere bei einer für diese Tisch- oder Stehleuchten typischen Betriebshöhe des Leuchtenkörpers.

Die Lichtstärke des zweiten Lichts beträgt je Ebene relativ zum Gesamtlichtstrom der Leuchte in einem zusammenhängenden Winkelbereich von 20° in dem entsprechenden Maximum bevorzugt I_{V} > 250 cd/klm oder I_{V} > 300 cd/klm. Auf diese Weise kann hocheffektiv eine entsprechend großflächig gleichmäßige Beleuchtungssituation durch die Sekundärbeleuchtung beispielsweise zur Erzielung Tageslicht-ähnlicher Beleuchtungssituationen erzielt werden.

Wie sich aus dem zuvor Beschriebenen ergibt, kann die Lichtverteilung des zweiten Lichts folglich ebenso symmetrisch oder asymmetrisch sein; dies je nach Belieben und den Gegebenheiten des Arbeitsplatzes oder der Arbeitsplätze entsprechend.

Das erste Licht weist bevorzugt einen Farbwiedergabeindex von RA > 90 auf. Ebenso kann auch das zweite Licht einen Farbwiedergabeindex von RA > 90 aufweisen. Somit kann eine insgesamt möglichst natürlich wirkende künstliche Lichtquelle bereitgestellt werden, welche eine besonders angenehme Lichtsituation für den Nutzer schafft.

Das erste Licht kann einen melanopischen Wirkungsfaktor von MDER < 0.8, besonders bevorzugt einen melanopischen Wirkungsfaktor von MDER < 0.53 aufweisen. Das zweite Licht kann einen melanopischen Wirkungsfaktor von MDER > 0.8, besonders bevorzugt einen melanopischen Wirkungsfaktor von MDER > 1.15 aufweisen. Somit kann eine Lichtsituation geschaffen werden, welche eine besonders hohe melanopische Wirksamkeit aufweist und sich somit positiv auf die Konzentration, Regeneration, Stimmung und Leistungsbereitschaft des Nutzers an dem Arbeitsplatz auswirkt.

Die Leuchtdichte des ersten Lichts kann bevorzugt in jeder C-Ebene in einem Winkelbereich von 65° bis 90° einen Wert von L_{V} < 3000 cd/m² oder L_{V} < 1500 cd/m² aufweisen. Ebenso kann die Leuchtdichte des ersten Lichts in jeder C-Ebene in einem Winkelbereich von 55° bis 90° einen Wert von L_{V} < 3000 cd/m² oder L_{V} < 1500 cd/m² aufweisen. Auf diese Weise kann eine wirkungsvolle Entblendung ermöglicht und so innerhalb eines normalen Sichtbereichs eines Nutzers eine blendreduzierte oder blendfreie Atmosphäre geschaffen werden. Zudem wird es so ermöglicht, Normanforderungen für Bildschirmarbeitsplätze gegen mögliche Reflexblendungen sicher zu erfüllen.

Die Leuchte kann ferner eine Steuerungsvorrichtung zur Steuerung der ersten Leuchtmittel und/oder zur Steuerung der zweiten Leuchtmittel aufweisen. Somit kann die Beleuchtungssituation in einfacher Weise eingestellt werden, wobei die ersten und zweiten Leuchtmittel dabei bevorzugt unabhängig voneinander eingestellt werden können.

Die Steuerungsvorrichtung weist bevorzugt zur manuellen Steuerung physische Steuerungselemente, wie Kontrollknöpfe und/oder Kontrollhebel und/oder Touchpads und dergleichen mehr, auf. Auf diese Weise wird es ermöglicht, dass der Nutzer an der Leuchte selbst direkt die Lichtabgabe und somit die Beleuchtungssituation einstellen kann. Dies ist insbesondere deswegen einfach möglich, da die Leuchte, anders als bisher bekannte vergleichbare Arbeitsplatzleuchten, direkt am Arbeitsplatz und somit in unmittelbarer Reichweite des Nutzers vorgesehen werden können, sodass dieser in einfacher und komfortabler Weise die Leuchtensituation direkt steuern kann. So kann beispielsweise die Leuchte am Leuchtenkörper oder dem Standelement (beispielsweise dessen Ständerarm oder Tragelement) entsprechende Steuerungselemente aufweisen, um beispielsweise Dimmlevel und/oder Farbtemperaturen der Primärbeleuchtung sowie der Sekundärbeleuchtung bevorzugt unabhängig voneinander einzustellen und/oder die Primärbeleuchtung beziehungsweise die Sekundärbeleuchtung nach Bedarf anbeziehungsweise auszuschalten. So können bspw. Steuerungsausfälle vermieden werden, die bei funkbasierten Steuerungen oft durch leere Batterien oder defekte bzw. verlegte Fernbedienungen entstehen.

Die Leuchte kann ferner einen Lichtsensor zur Erfassung von die Sekundärbeleuchtung betreffenden Parametern aufweisen. Diese Parameter können dann genutzt werden, um die Leuchte entsprechend einzustellen. Dies kann entweder manuell geschehen. Bevorzugt ist es jedoch, dass die Steuerungsvorrichtung derart ausgebildet ist, um wenigstens das zweite Leuchtmittel (bevorzugt aber beide Leuchtmittel) auf Basis der von dem Lichtsensor erfassten Parameter zu steuern und/oder zu regeln. Somit kann die Beleuchtungssituation automatisch an die gegebenen beziehungsweise optimalen Beleuchtungsbedingungen besonders bevorzugt kontinuierlich angepasst werden, und somit eine über die Zeit optimale Lichtabgabe zu ermöglichen.

Beispielsweise bei Verwendung von Tunable-White LEDs als das zweite Leuchtmittel kann mittels der Steuerungsvorrichtung das zweite Licht zur Sekundärbeleuchtung dynamisch beispielsweise zwischen Blau und Weiß verändert werden. So kann beispielsweise eine Simulation ziehender Wolken erzeugt werden. Durch eine solche dynamische Steuerung können Gewöhnungseffekte noch stärker reduziert werden, so dass die nichtvisuelle Effektivität der Leuchte verbessert und die damit erzeugte Lichtwirkung noch natürlicher bzw. bionischer wirkt.

Der Lichtsensor kann bevorzugt bezüglich der Horizontalebene um >30° oder >45° oder >60° nach oben geneigt sein; dies bevorzugt in der C180 Ebene. Auf diese Weise kann der entsprechende Lichtsensor einen Bereich der Sekundärbeleuchtung erfassen, welcher für die Beleuchtungssituation bevorzugt von hoher Bedeutung ist und beispielsweise eine gute Referenz der melanopischen Wirksamkeit der Leuchte widerspiegelt. Somit kann bevorzugt die Leuchte autonom auch die Deckenbeziehungsweise Wandsituation eines Raumes - mithin dessen Reflexionseigenschaften - sowie den Einfluss von Tageslicht mit einbeziehen, um so die Leuchte optimal anzusteuern und damit bevorzugt Energie zu sparen.

Die Leuchte kann ferner einen Bewegungssensor zur Erfassung von Bewegungen an einem der Leuchte zugeordneten Arbeitsplatz aufweisen. Somit ist es möglich, Bewegungen oder die Anwesenheit eines Nutzers zu detektieren und beispielsweise zum Betrieb der Leuchte einzusetzen. Bei Abwesenheit kann beispielsweise die Leuchte ausgeschaltet werden beziehungsweise ein Signal zum Ausschalten ausgeben. Besonders bevorzugt ist die Steuerungsvorrichtung derart ausgebildet, um das erste Leuchtmittel und/oder das zweite Leuchtmittel auf Basis der von dem Bewegungssensor erfassten Bewegungen zu steuern und/oder zu regeln. Die Leuchte kann somit autonom die Lichtsituation der Primär- und/oder Sekundärbeleuchtung einstellen, und somit optimal die Leuchte betreiben, wodurch wiederum Energie eingespart werden kann. Aufgrund der Nähe der Leuchte zum Arbeitsplatz können auch kleine Bewegungen eines Nutzers besonders einfach und effektiv detektiert werden.

Der Bewegungssensor kann bevorzugt bezüglich der Horizontalebene in einem Bereich von 40° bis 75°, vorzugsweise um 45°, nach unten geneigt sein; dies besonders bevorzugt in der C0 Ebene. Auf diese Weise kann gezielt und gerichtet die Position eines Nutzers an dem Arbeitsplatz detektiert werden, sodass eine hocheffektive Sensorik und somit Steuerung beziehungsweise Regelung der Leuchte möglich ist.

Das erste Leuchtmittel und das zweite Leuchtmittel sind bevorzugt unabhängig voneinander steuerbar und bevorzugt auch regelbar. Somit kann die Beleuchtungssituation individuell auf die Gegebenheiten und gegebenenfalls auch Wünsche des Nutzers eingestellt werden, was zu einer optimalen Beleuchtungssituation beiträgt.

Das erste Leuchtmittel beziehungsweise das zweite Leuchtmittel weist bevorzugt LEDs als Lichtquellen auf. Dabei kann es sich besonders bevorzugt um Tunable White LEDs handeln. LEDs als Leuchtmittel zeichnen sich insbesondere durch eine lange Lebensdauer und geringe Betriebs- und Wartungskosten aus. Die LEDs können bevorzugt je Leuchtmittel in Reihe parallel zur Erstreckungsachse verteilt angeordnet sein. Auf diese Weise kann eine besonders kompakte Leuchte mit guter und wirkungsvoller Lichtabgabe bereitgestellt werden.

Das erste Leuchtmittel und/oder das zweite Leuchtmittel ist/sind bevorzugt dimmbar, um somit unterschiedliche Helligkeitssituationen bereitzustellen. Besonders bevorzugt ist das entsprechende Leuchtmittel in einem Bereich von 100% bis 5% oder bis 3% oder bis 0% dimmbar. Dabei kann das entsprechende Leuchtmittel besonders bevorzugt stufenlos und/oder stufenweise dimmbar sein. Die Dimmung kann bevorzugt über die Steuerungsvorrichtung und in Abhängigkeit von dem Lichtsensor und/oder dem Bewegungssensor erfassten Daten gesteuert beziehungsweise geregelt werden. Insgesamt ist es über die Dimmbarkeit der Leuchte möglich, eine Störung des zirkadianen Rhythmus' durch Reduzierung der vertikalen Beleuchtungsstärke im Sichtbereich des Nutzers zu minimieren, indem die Sekundärbeleuchtung entsprechend deutlich heruntergedimmt oder auch ganz ausgeschaltet wird (mithin den hochmelanopischen Indirektlichtanteil), und den Direktlichtanteil (also die Primärbeleuchtung) auf ein Level von immer noch guter Sichtbarkeit zu reduzieren. Ein starkes Herunterdimmen ist - mit Blick auf den melanopischen Wirkungsgrad - insbesondere deswegen noch wirkungsvoll möglich, da die Lichtverteilung auch aufgrund der idealen Positionierbarkeit der Leuchte eine besonders gleichmäßige Beleuchtungsstärke auf der Arbeitsfläche ermöglicht und somit auch bei geringer Beleuchtungsstärke aufgrund der optimal eingestellten Beleuchtungssituation weiterhin eine gute Sichtbarkeit unterstützt.

Weitere Vorteile, Merkmale und Ausgestaltungen der vorliegenden Erfindung werden nun anhand der Figuren der begleitenden Zeichnungen beschrieben. Es zeigen:
- Figur 1: eine perspektivische Ansicht eines Arbeitsplatzes mit einer Tischleuchte gemäß einem ersten Ausführungsbeispiel der vorliegenden Erfindung,
- Figur 2: eine perspektivische Ansicht einer Tischleuchte gemäß einem zweiten Ausführungsbeispiel der vorliegenden Erfindung,
- Figur 3: eine perspektivische Explosionsdarstellung der Leuchte gemäß Figur 2,
- Figur 4: eine perspektivische Darstellung des Details A aus Figur 3,
- Figur 5: eine Schnittansicht entlang der Erstreckungsachse gesehen der Leuchte gemäß Figur 2 mit Darstellung der Lichtverteilung der Sekundärbeleuchtung,
- Figur 6: eine seitliche Schnittansicht der Leuchte gemäß Figur 1 im Bereich des Leuchtenkörpers, und
- Figur 7: eine Darstellung der Lichtverteilung einer erfindungsgemäßen Leuchte in der C0-C180 Ebene sowie der C90-C270 Ebene.

Die Figuren zeigen unterschiedliche Ausführungsformen und Ansichten sowie Lichtverteilungskurven einer erfindungsgemäßen Tisch- oder Stehleuchte 1 für Arbeitsplätze A. Bei der dargestellten Leuchte 1 handelt es sich gemäß den Ausführungsbeispielen jeweils um Tischleuchten 1 für Arbeitsplätze A. Grundsätzlich ist die Erfindung in gleicher Weise auch auf Stehleuchten für Arbeitsplätze A gerichtet. Im Folgenden wird daher für Tisch- oder Stehleuchten 1 für Arbeitsplätze A allgemein von Leuchten 1 gesprochen.

Die Leuchte 1 weist einen Leuchtenkörper 2 auf, welcher sich in einer Horizontalebene H entlang wenigstens einer Erstreckungsachse X erstreckt.

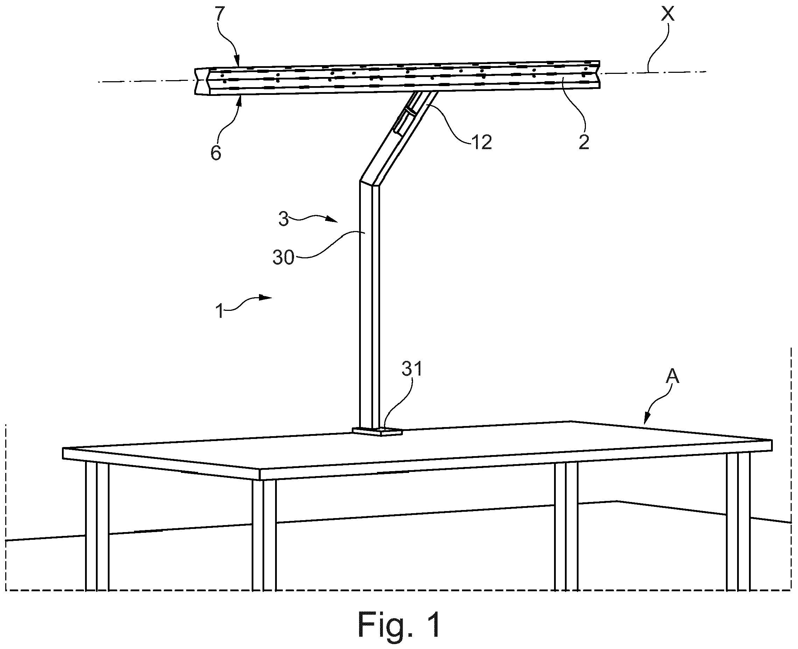

Wie insbesondere den Figuren 1 bis 3 zu entnehmen ist, kann sich der Leuchtenkörper 2 dabei entlang der Erstreckungsachse X längs erstrecken; mithin eine längliche Leuchte bzw. eine Linearleuchte bilden. Grundsätzlich ist es aber auch denkbar, dass sich der Leuchtenkörper 2 beispielsweise auch in einer anderen Richtung bevorzugt innerhalb der Horizontalebene H erstreckt, um so beispielsweise eine Flächenleuchte zu bilden. Der Leuchtenkörper 2 - insbesondere bei längserstreckender Ausgestaltung - kann entlang der Erstreckungsachse X eine Ausdehnung bzw. eine Längserstreckung von wenigstens 1150 mm oder wenigstens 1200 mm oder wenigstens 1450 mm oder wenigstens 1500 mm aufweisen.

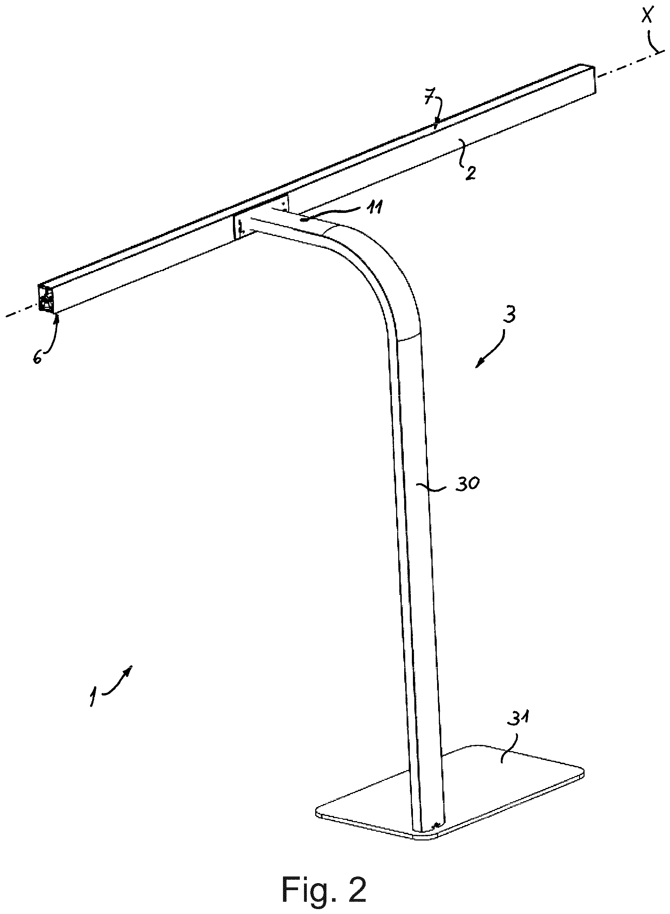

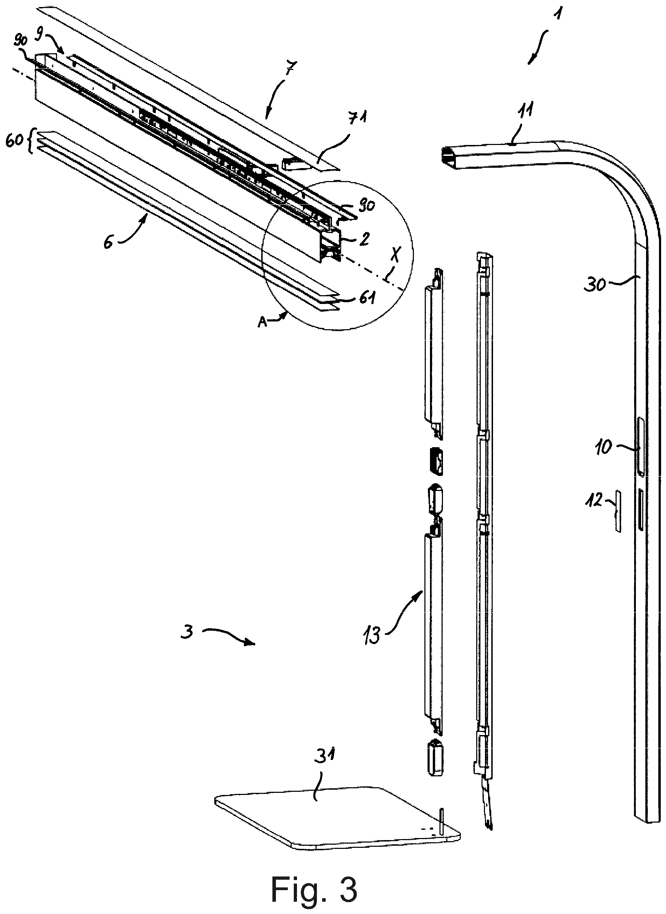

Wie insbesondere den Figuren 1 bis 3 beispielhaft zu entnehmen ist, kann die Leuchte 1 ferner bevorzugt ein Standelement 3 aufweisen. Dieses Standelement 3 kann einen Ständerarm 30, welcher den Leuchtenkörper 2 trägt und sich von diesem weg erstreckt, sowie ein Tragelement 31, welches an einem dem Leuchtenkörper 2 abgewandten Ende des Ständerarms 30 zum Tragen der Leuchte 1 vorgesehen ist, aufweisen. Wie in den Figuren 2 und 3 gezeigt, kann das Tragelement 31 ein Ständerfuß zum Aufstellen der Leuchte 1 auf eine Arbeitsfläche oder den Boden und dgl. sein. Wie beispielsweise der Figur 1 zu entnehmen ist, kann es sich bei dem Tragelement 31 auch um ein Montageelement, wie hier ein Tischmontageelement, handeln. Auch kann das Tragelement 31 beispielsweise ein Wandmontageelement sein, um die Leuchte 1 entsprechend am Arbeitsplatz A an einer Wand und dgl. zu montieren.

Wie in den Figuren nicht explizit dargestellt ist, kann der Ständerarm 30 ferner Gelenkelemente zur Veränderung der relativen Position des Leuchtenkörpers 2 zu dem Tragelement 31 aufweisen, um somit die Position des Leuchtenkörpers 2 am Arbeitsplatz A variabel einzustellen.

Der Leuchtenkörper 2 kann in Draufsicht auf die Horizontalebene H bezüglich des Tragelements 31 bevorzugt versetzt oder - beispielsweise mittels der Gelenkelemente - versetzbar angeordnet sein; dies vorzugsweise parallel zur Erstreckungsachse X. Der Versatz beträgt dabei vorzugsweise wenigstens 25 cm und besonders bevorzugt (wenigstens) 40 cm, um so eine optimale Positionierung des Leuchtenkörpers 2 auch bei randseitig an einem Tisch vorgesehener Leuchte 1 zu ermöglichen, wie die beispielhaft in Fig. 1 gezeigt ist.

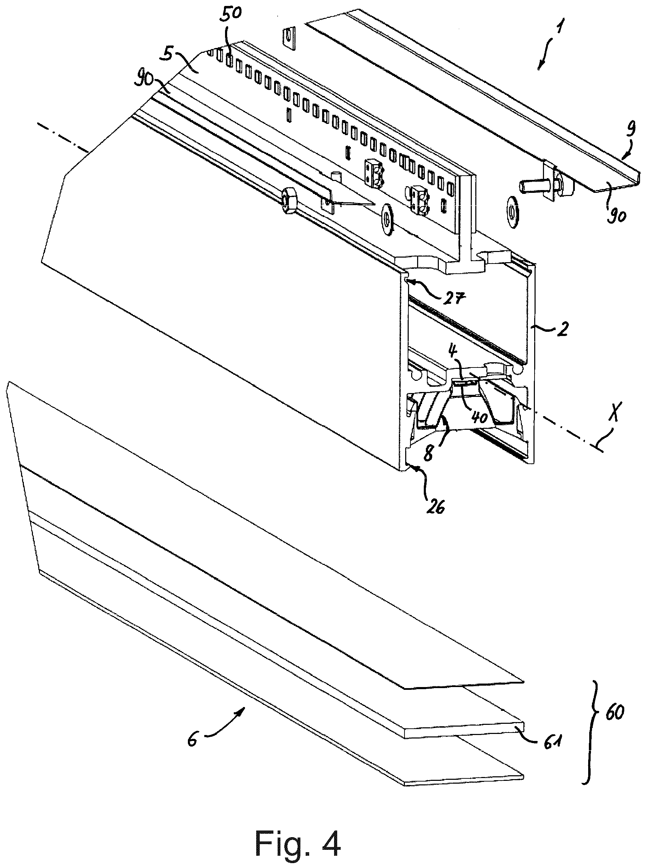

Die Leuchte 1 weist des Weiteren ein erstes Leuchtmittel 4 zur Abgabe eines ersten Lichts als Primärbeleuchtung auf. Ferner weist die Leuchte 1 ein zweites Leuchtmittel 5 zur Abgabe eines zweiten Lichts als Sekundärbeleuchtung auf. Die Leuchtmittel 4,5 weisen bevorzugt LEDs 40, 50 und insbesondere Tunable White LEDs auf. Die LEDs können, wie in den Figuren 4 bis 6 beispielhaft gezeigt, bevorzugt in Reihe parallel zur Erstreckungsachse X verteilt angeordnet sein. Sofern erforderlich, kann die Leuchte 1 - beispielsweise in dem Ständerarm 30 - Betriebselektronik 13 (bspw. LED-Treiber) zum Betrieb der Leuchtmittel 4, 5 aufweisen.

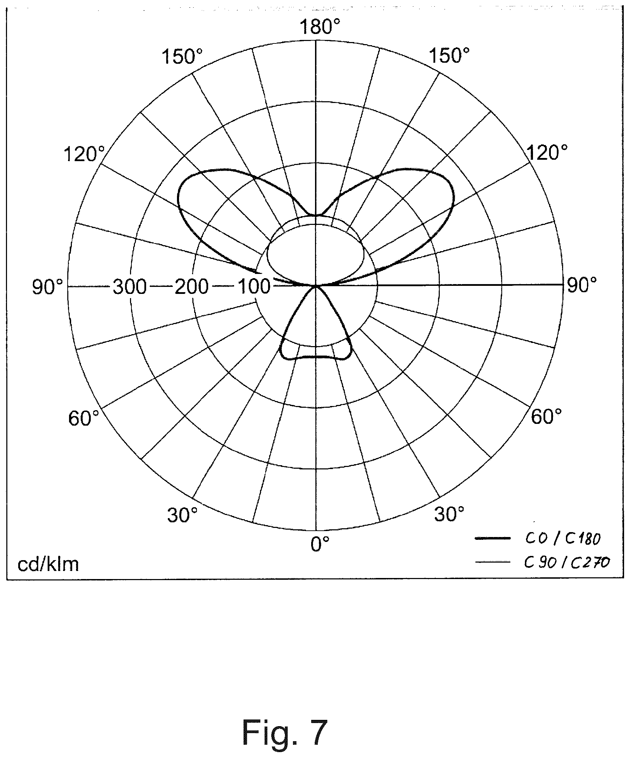

Die Leuchte 1 weist des Weiteren eine erste Lichtaustrittsfläche 6 zum Austritt des ersten Lichts bezüglich der Horizontalebene H im Wesentlichen nach unten auf. Die erste Lichtaustrittsfläche 6 ist dabei beispielsweise den Figuren 3 bis 6 zu entnehmen, wobei die Figur 7 die Lichtverteilung der über die erste Lichtaustrittsfläche 6 abgegebenen Primärbeleuchtung darstellt.

Die erste Lichtaustrittsfläche 6 kann sich bevorzugt im Wesentlichen in einer Erstreckungsebene parallel zur Horizontalebene H erstrecken, wie dies den Figuren 3 bis 6 zu entnehmen ist.

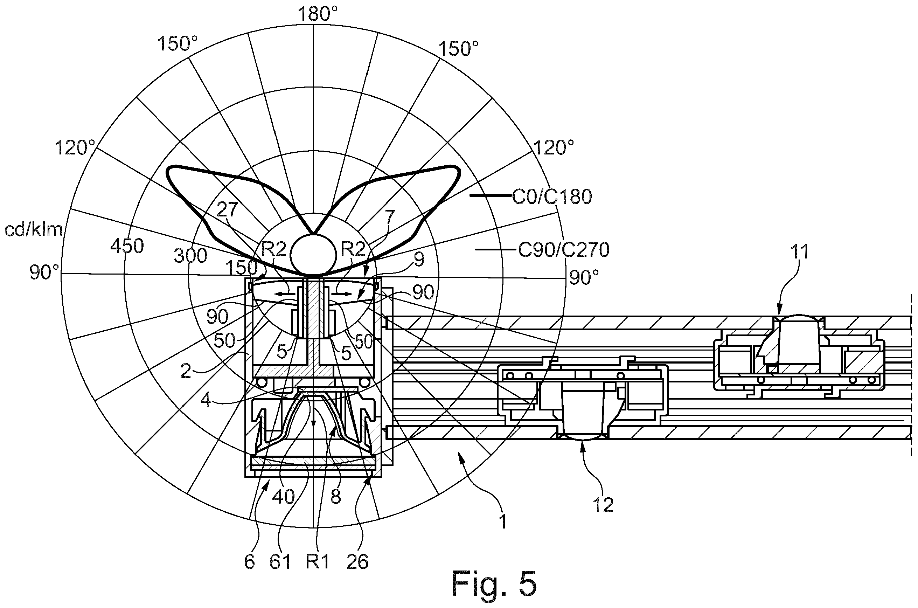

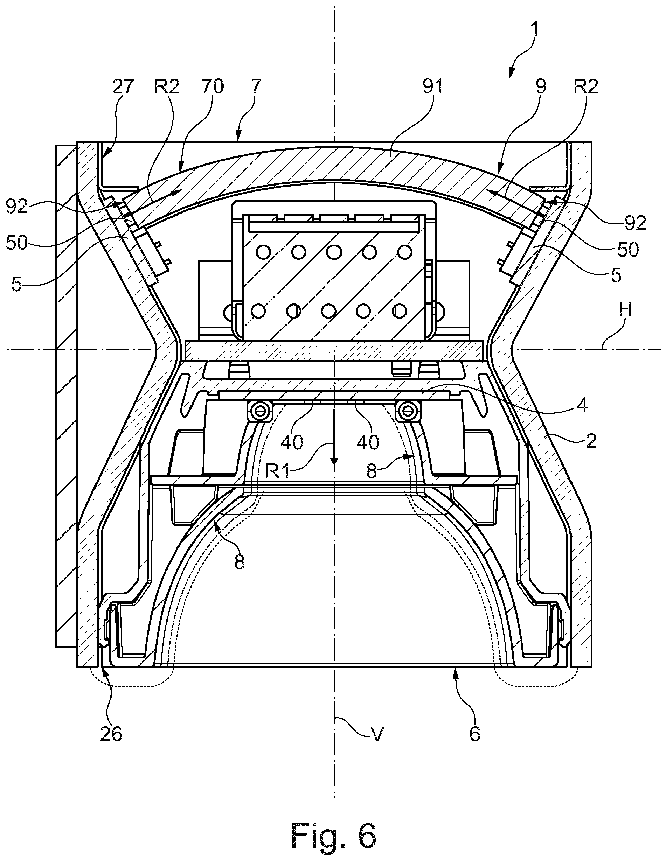

Das erste Leuchtmittel 4 ist bevorzugt in dem Leuchtenkörper 2 angeordnet, wie beispielsweise den Figuren 5 und 6 zu entnehmen ist. In diesem Fall kann dann die erste Lichtaustrittsfläche 6 durch eine erste Durchtrittsöffnung 26 in dem Leuchtenkörper 2 begrenzt sein.

Die erste Lichtaustrittsfläche 6 kann sich in Richtung der Erstreckungsachse X gesehen im Wesentlichen entlang des gesamten Leuchtenkörpers 2 erstrecken, wie dies beispielsweise aus der Figur 3 ersichtlich ist.

Die erste Lichtaustrittsfläche 6 kann bevorzugt eine Primäroptik 60 zur Beeinflussung des ersten Lichts aufweisen. Die Primäroptik 60 kann bevorzugt eine oder mehrere Platten und/oder Folien 61 und/oder einen Diffusor und dgl. mehr aufweisen. Die wenigstens eine der Platten und/oder Folien kann dabei ferner bevorzugt konkave bzw. konische und/oder geradlinige und/oder konvexe pyramiden- und/oder kegelförmige Mikrostrukturen aufweisen; so bspw. als Mikroprismenscheibe (MPS) ausgebildet sein. Wie insbesondere der Figur 5 zu entnehmen ist, kann die Primäroptik 60 in der ersten Durchtrittsöffnung 26 angeordnet sein und diese bevorzugt vollständig abdecken.

Wie ebenso der Figur 3 beispielhaft zu entnehmen ist, kann sich die erste Lichtaustrittsfläche 6 bevorzugt entlang der Erstreckungsachse X längs erstrecken; hier geradlinig erstrecken.

Die Leuchte 1 weist des Weiteren eine zweite Lichtaustrittsfläche 7 zum Austritt des zweiten Lichts vollständig nach oberhalb der Horizontalebene H und wenigstens zu einer oder - wie in den Figuren 5 und 7 beispielhaft gezeigt - beiden Seiten einer die Erstreckungsachse X aufweisenden Vertikalebene V (welche hier identisch mit der C90-C270 Ebene ist); dies derart, dass die Lichtverteilung des zweiten Lichts auf der wenigstens einen Seite in der Co Ebene oder in der C180 Ebene oder - wie in den Figuren 5 und 7 dargestellt - auf beiden Seiten in der C0-C180 Ebene breiter von der Vertikalebene V weg streut als die Lichtverteilung des ersten Lichts.

Die zweite Lichtaustrittsfläche 7 kann sich ebenso im Wesentlichen in eine Erstreckungsebene parallel zur Horizontalebene H erstrecken.

Ebenso kann das zweite Leuchtmittel 5 in dem Leuchtenkörper 2 angeordnet sein, wie beispielsweise Figuren 4 bis 6 zeigen. In diesem Fall kann dann die zweite Lichtaustrittsfläche 7 durch eine zweite Durchtrittsöffnung 27 in dem Leuchtenkörper 2 begrenzt sein, wie dies insbesondere den Figuren 4 bis 6 zu entnehmen ist.

Die zweite Lichtaustrittsfläche 7 kann sich bevorzugt in Richtung der Erstreckungsachse X gesehen ebenso im Wesentlichen entlang des gesamten Leuchtenkörpers erstrecken (vgl. Fig. 3).

Die zweite Lichtaustrittsfläche 7 kann bevorzugt eine Sekundäroptik 70 zur Beeinflussung des zweiten Lichts (vgl. Fig. 6) oder eine lichtdurchlässige Abdeckung 71 (vgl. Fig. 5) aufweisen. Die Sekundäroptik 70 kann, wie in Figur 6 dargestellt, eine Lichtleiterplatte aufweisen. Diese kann sich, wie in Fig. 6 gezeigt, als gebogene Lichtleiterplatte über die zweite Durchtrittsöffnung 27 erstrecken bzw. spannen. Bevorzugt ist folglich, dass die Sekundäroptik 70 bzw. die lichtdurchlässige Abdeckung 71 in der zweiten Durchtrittsöffnung 27 angeordnet ist und diese besonders bevorzugt vollständig abdeckt.

Die zweite Lichtaustrittsfläche 7 kann sich bevorzugt entlang der Erstreckungsachse X längs (hier mithin geradlinig) erstrecken, wie dies ebenso beispielhaft in der Figur 3 gezeigt ist.

Die Leuchte 1 und bevorzug deren Standelement 3 können bevorzugt derart ausgebildet sein, dass die zweite Lichtaustrittsfläche 7 in der Betriebsposition der Leuchte 1 oberhalb einer Höhe von 170 cm oder 175 cm oder 177 cm oder 180 cm gegenüber der Fußbodenebene und vorzugsweise ferner unterhalb einer Höhe von 200 cm gegenüber der Fußbodenebene angeordnet bzw. anordenbar ist. Dies wird bevorzugt über das Standelement 3 und insbesondere dessen vertikale Erstreckung ermöglicht; insbesondere abhängig davon, ob die Leuchte 1 als Tischleuchte oder als Stehleuchte eingesetzt werden soll. Auch ist es denkbar, dass das Standelement 3 beispielsweise teleskopartig ausgebildet ist und sich so in der Höhe verstellen lässt, um an die gegebenen Situationen entsprechend angepasst zu werden; beispielsweise bei Verwendung mit einem höhenverstellbaren Arbeitsplatz A.

Das erste Leuchtmittel 4 kann bevorzugt eine bezüglich der Horizontalebene H im Wesentlichen (vorzugsweise weitestgehend senkrecht) nach unten gerichtete erste Hauptlichtabgaberichtung R1 des ersten Lichts aufweisen. Wie in den Figuren 4 bis 6 beispielhaft gezeigt, kann die Leuchte 1 dann bevorzugt ferner Lichtrichtabschnitte 8 aufweisen, um das erste Licht entsprechend über die erste Lichtabgabefläche 6 gerichtet abzugeben. Die Lichtrichtabschnitte 8 sind hier beispielhaft als Reflektoren mit Querschnitt in Richtung der Erstreckungsachse X gesehen kuppelförmiger Kontur gebildet. Grundsätzlich kommen aber auch andere Elemente als Lichtrichtabschnitte 8 in Frage.

Das zweite Leuchtmittel 5 kann bevorzugt eine bezüglich der Horizontalebene H im Wesentlichen parallel gerichtete zweite Hauptlichtabgaberichtung R2 des zweiten Lichts auf, wie beispielhaft in den Figuren 5 und 6 gezeigt ist. Die zweite Hauptlichtabgaberichtung R2 ist dabei bevorzugt von der Vertikalebene V weg (vgl. Fig. 5) oder auf diese zu (vgl. Fig. 6) gerichtet. Die Leuchte 1 weist darüber hinaus dann ferner Lichtumlenkabschnitte 9 auf, um das zweite Licht entsprechend über die zweite Lichtabgabefläche 7 gerichtet abzugeben. Gemäß dem Ausführungsbeispiel der Figur 5, wo die zweite Hauptlichtabgaberichtung R2 von der Vertikalebene V weg gerichtet ist, kann es sich bei den Lichtumlenkabschnitten 9 beispielsweise um Reflektoren oder Reflektorabschnitte 90 handeln, welche das Licht entsprechend umlenken. Mit Verweis auf das Ausführungsbeispiel der Figur 6 ist es auch denkbar, dass beispielsweise in dem gezeigten Fall, wo die zweite Hauptlichtabgaberichtung R2 zu der Vertikalebene V hin gerichtet ist, der Lichtumlenkabschnitt 9 als Lichtleiterplatte 91 bereitgestellt ist. Das Licht wird dann hier längs entlang der Stirnseiten 92 der Lichtleiterplatte 91 seitlich in diese eingekoppelt und mittels Totalreflektion über die Lichtleiterplatte 91 verteilt. Durch Auskoppelstrukturen oder Auskoppelemente (beispielsweise Verletzungen in der Oberfläche des Lichtleiters 91) kann so das zweite Licht gezielt aus dem Lichtleiter 91 ausgekoppelt werden. Die Lichtleiterplatte 91 kann dabei bevorzugt die Sekundäroptik 70 bilden bzw. die Sekundäroptik 70 die Lichtleiterplatte 91 aufweisen.

Das zweite Licht bzw. die Sekundärbeleuchtung weist eine höhere Farbtemperatur auf als das erste Licht bzw. die Primärbeleuchtung.

Bevorzugt bedeutet dies, dass das zweite Licht eine um wenigstens 500 K oder wenigstens 800 K oder wenigstens 1000 K oder wenigstens 3000 K oder wenigstens 4500 K oder wenigstens 6000 K höhere Farbtemperatur als das erste Licht aufweist.

Das erste Leuchtmittel 4 gibt bevorzugt warmweißes und/oder neutralweißes Licht als erstes Licht ab.

Die Farbtemperatur des ersten Lichts liegt dabei bevorzug im Bereich von 2500 K bis 4700 K oder im Bereich von 2600 K bis 3600 K. Die Farbtemperatur des ersten Lichts kann besonders bevorzugt innerhalb des vorgenannten Bereichs oder innerhalb eines in diesem Bereich liegenden Abstimmbereichs einstellbar sein; mithin eine Tunable White Lichtfunktion aufweisen.

Beispielsweise in einem mittleren Bereich eines Arbeitsplatzes A bzw. Arbeitsplatztisches, wo die Haupt-Sehaufgabe in der Regel positioniert ist, beträgt die Beleuchtungsstärke des ersten Lichts bevorzugt mittlere Ev > 750 lx bzw., in Kombination mit dem an der Decke reflektierten zweiten Licht, E_{V} > 1000 lx.

Das erste Licht weist bevorzugt in der Co Ebene oder in der C180 Ebene und weiter bevorzugt, wie beispielsweise in Figur 7 gezeigt, in der C0-C180 Ebene je Ebene eine - bevorzugt wenigstens verstärkte - Lichtverteilung in einem Winkelbereich von <60° oder <45° oder <30° auf; dies bevorzugt gegenüber der Vertikalebene V bzw. ausgehend von der (senkrecht) nach unten gerichteten ersten Hauptlichtabgaberichtung R1 des ersten Lichts bzw. des ersten Leuchtmittels 4.

Die Co Ebene ist bevorzugt die von dem Standelement 3 oder dem Tragelement 31 weg gerichtete und somit diejenige Lichtverteilungsebene, welche bevorzugt einem am Arbeitsplatz A platzierten Nutzer zugewandt ist. Die C180 Ebene ist folglich bevorzugt die zu dem Standelement 3 oder dem Tragelement 31 hin gerichtet und somit diejenige Lichtverteilungsebene, welche bevorzugt von einem am Arbeitsplatz A platzierten Nutzer weg gewandt ist und sich somit in Blickrichtung des Nutzers (Gesichtsfeld) weg erstreckt.

Das erste Licht kann ferner eine - bevorzugt wenigstens verstärkte - Lichtverteilung in der C90-C270 Ebene in einem Winkelbereich von <65° oder <50° oder <35° aufweisen; dies bevorzugt gegenüber einer zur Vertikalebene V orthogonal orientierten und die C90 Ebene von der C270 Ebene trennenden zweiten Vertikalebene (entsprechend der Zeichenebene der Figuren 5 und 6) bzw. ausgehend von der (senkrecht) nach unten gerichteten ersten Hauptlichtabgaberichtung R1 des ersten Lichts bzw. des ersten Leuchtmittels 4.

Die Lichtstärkeverteilung des ersten Lichts in der Co Ebene oder in der C180 Ebene oder, wie in den Figuren 5 und 7 gezeigt, in der C0-C180 Ebene weist bevorzugt je Ebene (wie in den Figuren 5 und 7 gezeigt) oder insgesamt ein Maximum in einem Winkelbereich zwischen 0° und <15°, vorzugsweise bei 0° auf. Die Lichtstärke des ersten Lichts beträgt, relativ zum Gesamtlichtstrom der Leuchte, in einem zusammenhängenden Winkelbereich von 40° in dem entsprechenden Maximum oder übergreifend in den entsprechenden Maxima besonders bevorzugt I_{V} > 150 cd/klm.

Das erste Licht kann einen Farbwiedergabeindex von RA > 90 aufweisen.

Das erste Licht kann einen melanopischen Wirkungsfaktor von MDER < 0.8, vorzugsweise einen melanopischen Wirkungsfaktor von MDER < 0.53 aufweisen.

In einer besonders bevorzugten Ausgestaltungsform kann beispielsweise das erste Licht eine Farbtemperatur von 3000 K bei einem Farbwiedergabeindex von RA > 90 und einem melanopischen Wirkungsfaktor von MDER < 0.8 (oder auch MDER < 0.53) aufweisen.

Die Leuchtdichte des ersten Lichts kann bevorzugt in jeder C-Ebene in einem Winkelbereich von 65° bis 90° L_{V} < 3000 cd/m² oder L_{V} < 1500 cd/m² betragen. Ferner kann die Leuchtdichte des ersten Lichts in jeder C-Ebene in einem Winkelbereich von 55° bis 90° L_{V} < 3000 cd/m² oder L_{V} < 1500 cd/m² betragen.

Das zweite Leuchtmittel 5 gibt bevorzugt neutralweißes und/oder kaltweißes Licht als zweites Licht ab.

Das zweite Leuchtmittel 5 ist dazu geeignet, das zweite Licht mit einer Farbtemperatur von > 9000K oder > 9900K abzugeben.

Bevorzugt liegt dabei die Farbtemperatur des zweiten Lichts im Bereich von 4500 K bis 15000 K oder von 5500 K bis 15000 K oder von 5500 K bis 9900 K; bevorzugt > 9900 K. Die Farbtemperatur des zweiten Lichts ist besonders bevorzugt innerhalb dieses Bereichs oder innerhalb eines in diesem Bereich liegenden Abstimmbereichs einstellbar; mithin weist insbesondere das zweite Leuchtmittel bevorzugt eine Tunable White Lichtfunktion auf.

Das zweite Leuchtmittel kann bevorzugt in der C0 Ebene oder in der C180 Ebene und weiter bevorzugt, wie beispielsweise in den Figuren 5 und 7 gezeigt, in der C0-C180 Ebene je Ebene eine Lichtverteilung des zweiten Lichts in einem Winkelbereich von >90° und <180°, vorzugsweise eine - bevorzugt wenigstens verstärkte - Lichtverteilung des zweiten Lichts in einem Winkelbereich zwischen 100° und 155° oder zwischen 110° und 145°, aufweisen.

Das zweite Licht wird bevorzugt in der C0-C180 Ebene in einer Batwing-artigen bzw. Batwing-Lichtverteilungskurve abgegeben, wie dies beispielhaft in den Figuren 5 und 7 gezeigt ist. Dies vorzugsweise mit reduziertem bis im Wesentlichen keinem Lichtanteil im Winkelbereich von 165° bis 180°, wie den vorgenannten Figuren 5 und 7 ebenso zu entnehmen ist.

Das zweite Licht wird besonders bevorzugt in der C90-C270 Ebene wenigstens in einer Lambertsch-abstrahlenden (siehe Figuren 5 und 7) oder Batwing oder Batwing-artigen Lichtverteilungskurve abgeben.

Die Lichtstärkeverteilung des zweiten Lichts in der C0 Ebene oder in der C180 Ebene oder, wie in den Figuren 5 und 7 gezeigt, in der C0-C180 Ebene, weist bevorzugt je Ebene ein Maximum in einem Winkelbereich zwischen >90° und <160°, vorzugsweise zwischen 115° und 140°, in dem dargestellten Ausführungsbeispiel bevorzugt bei 128°, auf. Die Lichtstärke des zweiten Lichts beträgt je Ebene relativ zum Gesamtlichtstrom der Leuchte in einem zusammenhängenden Winkelbereich von 20° in dem entsprechenden Maximum besonders bevorzugt I_{V} > 250 cd/klm oder I_{V} > 300 cd/klm.

Das zweite Licht weist bevorzugt einen Farbwiedergabeindex von RA > 90 auf.

Das zweite Licht weist bevorzugt einen melanopischen Wirkungsfaktor von MDER > 0.8, besonders bevorzugt einen melanopischen Wirkungsfaktor von MDER > 1.15, auf.

Das Licht des zweiten Leuchtmittels 5 macht bevorzugt 75 % oder mehr der gesamten Lichtverteilung der Leuchte 1 aus. Folglich macht das erste Licht des ersten Leuchtmittels 4 bevorzugt 25 % oder weniger der gesamten Lichtverteilung der Leuchte 1 aus. In einer besonders bevorzugten Ausgestaltungsform ist das Verhältnis von dem ersten Licht zu dem zweiten Licht an der gesamten Lichtverteilung veränderbar.

Die Leuchte 1 weist ferner eine Steuerungsvorrichtung zur Steuerung des ersten Leuchtmittels 4 und/oder des zweiten Leuchtmittels 5 auf. Darüber kann die Steuerungsvorrichtung beispielsweise das zuvor beschriebene Verhältnis von erstem Licht zu zweitem Licht an der gesamten Lichtverteilung steuern.

Die Steuerungsvorrichtung weist bevorzugt zur manuellen Steuerung physische Steuerungselemente 10, wie Kontrollknöpfe und/oder Kontrollhebel und/oder Touchpads und dgl., auf.

Die Leuchte 1 kann des Weiteren einen Lichtsensor 11 zur Erfassung von die Sekundärbeleuchtung betreffenden Parametern aufweisen (vgl. Fig. 2,3,5). In einer besonders bevorzugten Ausgestaltungsform kann dabei die Steuerungsvorrichtung derart ausgebildet sein, um wenigstens das zweite Leuchtmittel 5 oder auch beide Leuchtmittel 4, 5 auf Basis der von dem Lichtsensor 11 erfassten Parameter zu steuern und/oder zu regeln. Der Lichtsensor 11 kann bevorzugt bezüglich der Horizontalebene H um >30° oder >45° oder >60° nach oben geneigt sein; dies bevorzugt in der C180 Ebene.

Die Leuchte 1 kann des Weiteren einen Bewegungssensor 12 zur Erfassung von Bewegungen an einem der Leuchte 1 zugeordneten Arbeitsplatz A aufweisen (vgl. Fig. 1 und 5). Dabei kann die Steuerungsvorrichtung bevorzugt derart ausgebildet sein, um das erste Leuchtmittel 4 und/oder das zweite Leuchtmittel 5 auf Basis der von dem Bewegungssensor 12 erfassten Bewegung zu steuern und/oder zu regeln. Der Bewegungssensor 12 kann bevorzugt bezüglich der Horizontalebene H in einem Bereich von 40° bis 75°, vorzugsweise um 45°, nach unten geneigt sein; dies besonders bevorzugt in der C0 Ebene.

Besonders bevorzugt sind das erste Leuchtmittel 4 und das zweite Leuchtmittel 5 unabhängig voneinander steuerbar und bevorzugt auch regelbar.

Vorzugsweise ist das erste Leuchtmittel dimmbar. Ebenso kann bevorzugt auch das zweite Leuchtmittel 5 dimmbar sein. Das jeweilige Leuchtmittel 4, 5 kann dabei bevorzugt in einem Bereich von 100% bis 5% oder in einem Bereich von 100% bis 3% oder in einem Bereich von 100% bis 0% dimmbar sein. Dabei kann das entsprechende Leuchtmittel 4,5 bevorzugt stufenlos und/oder stufenweise dimmbar sein. Die Dimmfunktion kann dabei manuell und/oder - beispielsweise mittels der Steuerungsvorrichtung - automatisiert umgesetzt werden.

Die vorliegende Erfindung ist durch die vorbeschriebenen Ausführungsbeispiele nicht beschränkt, sofern sie vom Gegenstand der folgenden Ansprüche umfasst ist.

## Patentansprüche

1. Tisch- oder Stehleuchte (1) für Arbeitsplätze (A), aufweisend:
einen Leuchtenkörper (2), welcher sich in einer Horizontalebene (H) entlang wenigstens einer Erstreckungsachse (X) erstreckt,
ein erstes Leuchtmittel (4) zur Abgabe eines ersten Lichts als Primärbeleuchtung,
ein zweites Leuchtmittel (5) zur Abgabe eines zweiten Lichts als Sekundärbeleuchtung,
eine erste Lichtaustrittsfläche (6) zum Austritt des ersten Lichts bezüglich der Horizontalebene (H) im Wesentlichen nach unten, und
eine zweite Lichtaustrittsfläche (7) zum Austritt des zweiten Lichts vollständig nach oberhalb der Horizontalebene (H) und wenigstens zu einer oder beiden Seiten einer die Erstreckungsachse (X) aufweisenden Vertikalebene (V) derart,
dass die Lichtverteilung des zweiten Lichts auf der wenigstens einen Seite in der C180 Ebene oder in der C0 Ebene oder auf beiden Seiten in der C0-C180 Ebene breiter von der Vertikalebene (V) weg streut als die Lichtverteilung des ersten Lichts,
wobei das zweite Licht eine höhere Farbtemperatur aufweist als das erste Licht.

2. Tisch- oder Stehleuchte (1) nach Anspruch 1,
wobei sich die erste Lichtaustrittsfläche (6) im Wesentlichen in einer Erstreckungsebene parallel zur Horizontalebene (H) erstreckt, und/oder wobei sich die zweite Lichtaustrittsfläche (7) im Wesentlichen in einer Erstreckungsebene parallel zur Horizontalebene (H) erstreckt, und/oder wobei das erste Leuchtmittel (4) in dem Leuchtenkörper (2) angeordnet ist, und die erste Lichtaustrittsfläche (6) durch eine erste Durchtrittsöffnung (26) in dem Leuchtenkörper (2) begrenzt ist, und/oder
wobei das zweite Leuchtmittel (5) in dem Leuchtenkörper (2) angeordnet ist, und die zweite Lichtaustrittsfläche (7) durch eine zweite Durchtrittsöffnung (27) in dem Leuchtenkörper (2) begrenzt ist, und/oder
wobei sich die erste Lichtaustrittsfläche (6) in Richtung der Erstreckungsachse (X) gesehen im Wesentlichen entlang des gesamten Leuchtenkörpers (2) erstreckt, und/oder
wobei sich die zweite Lichtaustrittsfläche (7) in Richtung der Erstreckungsachse (X) gesehen im Wesentlichen entlang des gesamten Leuchtenkörpers (2) erstreckt.

3. Tisch- oder Stehleuchte (1) nach einem der vorhergehenden Ansprüche, wobei die erste Lichtaustrittsfläche (6) eine Primäroptik (60) zur Beeinflussung des ersten Lichts aufweist,
wobei vorzugsweise die Primäroptik (60) eine oder mehrere Platten und/oder Folien (61) und/oder einen Diffusor aufweist, wobei vorzugsweise wenigstens eine der Platten und/oder Folien konkave bzw. konische und/oder geradlinige und/oder konvexe pyramiden- und/oder kegelförmige Mikrostrukturen aufweist,
wobei vorzugsweise die Primäroptik (60) in der ersten Durchtrittsöffnung (26) angeordnet ist und diese bevorzugt vollständig abdeckt, und/oder
wobei die zweite Lichtaustrittsfläche (7) eine Sekundäroptik (70) zur Beeinflussung des zweiten Lichts oder eine lichtdurchlässige Abdeckung (71) aufweist,
wobei vorzugsweise die Sekundäroptik (70) eine Lichtleiterplatte (91) aufweist,
wobei vorzugsweise die Sekundäroptik (70) oder lichtdurchlässige Abdeckung (71) in der zweiten Durchtrittsöffnung (27) angeordnet ist und diese bevorzugt vollständig abdeckt.

4. Tisch- oder Stehleuchte (1) nach einem der vorhergehenden Ansprüche, wobei das erste Leuchtmittel (4) eine bezüglich der Horizontalebene (H) im Wesentlichen nach unten gerichtete erste Hauptlichtabgaberichtung (R1) des ersten Lichts aufweist, wobei die Tisch- oder Stehleuchte (1) bevorzugt ferner Lichtrichtabschnitte (8) aufweist, um das erste Licht entsprechend über die erste Lichtabgabefläche gerichtet abzugeben, und/oder
wobei das zweite Leuchtmittel (5) eine bezüglich der Horizontalebene (H) im Wesentlichen parallel gerichtete zweite Hauptlichtabgaberichtung (R2) des zweiten Lichts aufweist, welche vorzugsweise von der Vertikalebene (V) weg oder auf diese zu gerichtet ist, und wobei die Tisch- oder Stehleuchte (1) ferner Lichtumlenkabschnitte (9) aufweist, um das zweite Licht entsprechend über die zweite Lichtabgabefläche gerichtet abzugeben.

5. Tisch- oder Stehleuchte (1) nach einem der vorhergehenden Ansprüche, ferner aufweisend ein Standelement (3) mit einem Ständerarm (30), welcher den Leuchtenkörper (2) trägt und sich von diesem weg erstreckt, sowie einem Tragelement (31), welches an einem dem Leuchtenkörper (2) abgewandten Ende des Ständerarms (30) zum Tragen der Leuchte vorgesehen ist,
wobei vorzugsweise das Tragelement (31) ein Ständerfuß oder ein Montageelement, wie ein Tisch- oder Wandmontageelement, ist,
wobei vorzugsweise der Ständerarm (30) Gelenkelemente zur Veränderung der relativen Position des Leuchtenkörpers (2) zu dem Tragelement (31) aufweist, wobei der Leuchtenkörper (2) in Draufsicht auf die Horizontalebene (H) bzgl. des Tragelements (31) vorzugsweise versetzt oder versetzbar angeordnet ist, dies besonders vorzugsweise parallel zur Erstreckungsachse (X), wobei der Versatz vorzugsweise wenigstens 25cm und besonders bevorzugt 40cm beträgt.

6. Tisch- oder Stehleuchte (1) nach einem der vorhergehenden Ansprüche, wobei die Tisch- oder Stehleuchte (1), vorzugsweise deren Standelement (3), derart ausgebildet ist, dass die zweite Lichtaustrittsfläche (7) in der Betriebsposition der Tisch- oder Stehleuchte (1) oberhalb einer Höhe von 170 cm oder oberhalb einer Höhe von 175 cm oder oberhalb einer Höhe von 177 cm oder oberhalb einer Höhe von 180 cm gegenüber der Fußbodenebene angeordnet oder anordenbar ist, vorzugsweise ferner unterhalb einer Höhe von 200 cm gegenüber der Fußbodenebene, und/oder
wobei sich der Leuchtenkörper (2) entlang der Erstreckungsachse (X) längs erstreckt, vorzugsweise mit einer Längserstreckung von wenigstens 1150 mm oder wenigstens 1200 mm oder wenigstens 1450 mm oder wenigstens 1500mm, und/oder
wobei sich die erste Lichtaustrittsfläche (6) entlang der Erstreckungsachse (X) längs erstreckt, und/oder
wobei sich die zweite Lichtaustrittsfläche (7) entlang der Erstreckungsachse (X) längs erstreckt.

7. Tisch- oder Stehleuchte (1) nach einem der vorhergehenden Ansprüche, wobei das zweite Licht eine um wenigstens 500 K oder wenigstens 800 K oder wenigstens 1000 K oder wenigstens 3000 K oder wenigstens 4500 K oder wenigstens 6000 K höhere Farbtemperatur aufweist als das erste Licht, und/oder wobei das erste Leuchtmittel (4) warmweißes und/oder neutralweißes Licht als erstes Licht abgibt, und/oder
wobei die Farbtemperatur (CCT) des ersten Lichts im Bereich von 2500 K bis 4700 K oder von 2600 K bis 3600 K liegt, wobei vorzugsweise die Farbtemperatur des ersten Lichts innerhalb dieses Bereichs oder innerhalb eines in diesem Bereich liegenden Abstimmbereichs einstellbar ist, und/oder wobei das zweite Leuchtmittel (5) neutralweißes und/oder kaltweißes Licht als zweites Licht abgibt, und/oder
wobei das zweite Leuchtmittel (5) dazu geeignet ist, das zweite Licht mit einer Farbtemperatur von > 9000 K oder > 9900 K abzugeben, und/oder wobei die Farbtemperatur (CCT) des zweiten Lichts im Bereich von 4500 K bis 15000 K oder von 5500 K bis 15000 K oder von 5500 K bis 9900 K liegt, wobei vorzugsweise die Farbtemperatur des zweiten Lichts innerhalb dieses Bereichs oder innerhalb eines in diesem Bereich liegenden Abstimmbereichs einstellbar ist.

8. Tisch- oder Stehleuchte (1) nach einem der vorhergehenden Ansprüche, wobei das zweite Licht des zweiten Leuchtmittels (5) 75% oder mehr der gesamten Lichtverteilung der Tisch- oder Stehleuchte (1) ausmacht, und/oder wobei das Verhältnis von dem ersten Licht zu dem zweiten Licht an der gesamten Lichtverteilung veränderbar ist.

9. Tisch- oder Stehleuchte (1) nach einem der vorhergehenden Ansprüche, wobei das erste Licht in der C180 Ebene, welche bevorzugt zu dem Standelement (3) oder dem Tragelement (31), wenn vorhanden, hin gerichtet ist, oder in der C0 Ebene, vorzugsweise in der C0-C180 Ebene, je Ebene eine - bevorzugt wenigstens verstärkte - Lichtverteilung in einem Winkelbereich von <60° oder <45° oder <30° aufweist, dies bevorzugt gegenüber der Vertikalebene (V) oder ausgehend von der ersten Hauptlichtabgaberichtung (R1), und/oder wobei das erste Licht eine - bevorzugt wenigstens verstärkte - Lichtverteilung in der C90-C270 Ebene je Ebene in einem Winkelbereich von <65° oder <50° oder <35° aufweist, dies bevorzugt gegenüber einer zur Vertikalebene (V) orthogonal orientierten und die C90 Ebene von der C270 Ebene trennenden zweiten Vertikalebene oder ausgehend von der ersten Hauptlichtabgaberichtung (R1).

10. Tisch- oder Stehleuchte (1) nach einem der vorhergehenden Ansprüche, wobei das zweite Leuchtmittel (5) in der C180 Ebene, welche bevorzugt zu dem Standelement (3) oder dem Tragelement (31), wenn vorhanden, hin gerichtet ist, oder in der C0 Ebene, vorzugsweise in der C0-C180 Ebene, je Ebene eine Lichtverteilung des zweiten Lichts in einem Winkelbereich von >90° und <180°, vorzugsweise eine - bevorzugt wenigstens verstärkte - Lichtverteilung des zweiten Lichts in einem Winkelbereich zwischen 100° und 155° oder zwischen 110° und 145°, aufweist, und/oder
wobei das zweite Licht in der C0-C180 Ebene in einer Batwing- oder Batwing-artigen Lichtverteilungskurve abgegeben wird, dies vorzugsweise mit reduziertem bis im Wesentlichen keinem Lichtanteil im Winkelbereich von 165°-180°, und/oder
wobei das zweite Licht in der C90-C270 Ebene wenigstens in einer Lambertsch-abstrahlenden oder Batwing oder Batwing-artigen Lichtverteilungskurve abgeben wird.

11. Tisch- oder Stehleuchte (1) nach einem der vorhergehenden Ansprüche, wobei die Lichtstärkeverteilung des ersten Lichts in der C180 Ebene oder in der C0 Ebene oder in der C0-C180 Ebene je Ebene oder insgesamt ein Maximum in einem Winkelbereich zwischen 0° und <15°, vorzugsweise bei 0° aufweist,
wobei vorzugsweise die Lichtstärke des ersten Lichts relativ zum Gesamtlichtstrom der Leuchte in einem zusammenhängenden Winkelbereich von 40° in dem entsprechenden Maximum oder übergreifend in den entsprechenden Maxima I_{V} > 150 cd/klm,
und/oder
wobei die Lichtstärkeverteilung des zweiten Lichts in der C180 Ebene oder in der C0 Ebene oder in der C0-C180 Ebene je Ebene ein Maximum in einem Winkelbereich zwischen >90° und <160°, vorzugsweise zwischen 115° und 140°, aufweist,
wobei vorzugsweise die Lichtstärke des zweiten Lichts je Ebene relativ zum Gesamtlichtstrom der Leuchte in einem zusammenhängenden Winkelbereich von 20° in dem entsprechenden Maximum I_{V} > 250 cd/klm oder I_{V} > 300 cd/klm beträgt.

12. Tisch- oder Stehleuchte (1) nach einem der vorhergehenden Ansprüche,
wobei das erste Licht einen Farbwiedergabeindex von Ra > 90 aufweist, und/oder
wobei das zweite Licht einen Farbwiedergabeindex von Ra > 90 aufweist, und/oder
wobei das erste Licht einen melanopischen Wirkungsfaktor von MDER < 0.8 oder MDER < 0.53 aufweist, und/oder
wobei das zweite Licht einen melanopischen Wirkungsfaktor von MDER > 0.8 oder MDER > 1.15 aufweist.

13. Tisch- oder Stehleuchte (1) nach einem der vorhergehenden Ansprüche,
wobei die Leuchtdichte des ersten Lichts in jeder C-Ebene in einem Winkelbereich von 65° bis 90° L_{V} < 3000 cd/m² oder L_{V} < 1500 cd/m² beträgt,
und/oder wobei die Leuchtdichte des ersten Lichts in jeder C-Ebene in einem Winkelbereich von 55° bis 90° L_{V} < 3000 cd/m² oder L_{V} < 1500 cd/m² beträgt.

14. Tisch- oder Stehleuchte (1) nach einem der vorhergehenden Ansprüche, ferner aufweisend eine Steuerungsvorrichtung zur Steuerung der ersten und/oder zweiten Leuchtmittel (4, 5),
wobei die Steuerungsvorrichtung zur manuellen Steuerung bevorzugt physische Steuerungselemente (10), wie Kontrollknöpfe und/oder Kontrollhebel und/oder Touchpads, aufweist,
und/oder
ferner aufweisend einen Lichtsensor (11) zur Erfassung von die Sekundärbeleuchtung betreffenden Parametern,
wobei vorzugsweise der Lichtsensor (11) bezüglich der Horizontalebene (H) um >30° oder >45°oder >60° nach oben geneigt ist, dies besonders bevorzugt in der C180 Ebene,
wobei vorzugsweise die Steuerungsvorrichtung derart ausgebildet ist, um wenigstens das zweite Leuchtmittel (5) auf Basis der von dem Lichtsensor (11) erfassten Parameter zu steuern und/oder zu regeln,
und/oder
ferner aufweisend einen Bewegungssensor (12) zur Erfassung von Bewegungen an einem der Tisch- oder Stehleuchte (1) zugeordneten Arbeitsplatz (A),
wobei vorzugsweise der Bewegungssensor (12) bezüglich der Horizontalebene (H) in einem Bereich von 40° bis 75°, vorzugsweise um 45°, nach unten geneigt ist, dies besonders bevorzugt in der C0 Ebene, wobei vorzugsweise die Steuerungsvorrichtung derart ausgebildet ist, um das erste Leuchtmittel (4) und/oder das zweite Leuchtmittel (5) auf Basis der von dem Bewegungssensor (12) erfassten Bewegungen zu steuern und/oder zu regeln,
und/oder
wobei das erste Leuchtmittel (4) und das zweite Leuchtmittel (5) unabhängig voneinander steuerbar und bevorzugt auch regelbar sind.

15. Tisch- oder Stehleuchte (1) nach einem der vorhergehenden Ansprüche, wobei das erste Leuchtmittel (4) und/oder das zweite Leuchtmittel (5) LEDs (40, 50), vorzugsweise Tunable White LEDs, aufweist, wobei die LEDs (40, 50) je Leuchtmittel (4, 5) bevorzugt in Reihe parallel zur Erstreckungsachse (X) verteilt angeordnet sind, und/oder
wobei das erste Leuchtmittel (4) und/oder das zweite Leuchtmittel (5) dimmbar ist/sind, vorzugsweise in einem Bereich von 100% bis 5% oder bis 3% oder bis 0%, wobei das erste Leuchtmittel (4) und/oder das zweite Leuchtmittel (5) vorzugsweise stufenlos und/oder stufenweise dimmbar ist/sind.
